# EUROPEAN PATENT SPECIFICATION

(11) **EP 2 764 279 B1**
(45) Date of publication and mention of the grant of the patent: **17.01.2018**
(21) Application number: 12838579.6
(22) Date of filing: 28.09.2012
(51) Int. Cl.: F16H 9/08, F16H 15/16

(54) **METHODS AND DEVICES FOR IMPROVING THE PERFORMANCE OF CVTS**
VERFAHREN UND VORRICHTUNGEN ZUR VERBESSERUNG DER LEISTUNG STUFENLOSER GETRIEBE
PROCÉDÉS ET DISPOSITIFS POUR AMÉLIORER LES PERFORMANCES DES TVC

(30) Priority: 04.10.2011 US 201161543303 P; 05.11.2011 US 201161556188 P; 11.11.2011 US 201161559032 P; 19.01.2012 US 201261588198 P; 20.01.2012 US 201261588681 P; 09.03.2012 US 201261608662 P
(43) Date of publication of application: 13.08.2014
(73) Proprietor: Tay, Armin, West Covina, CA 91792 (US)
(72) Inventor: Tay, Armin, West Covina, CA 91792 (US)
(74) Representative: Ackermann, Joachim
(86) International application number: PCT/US2012/057807
(87) International publication number: WO 2013/052367

(56) References cited:
- DE-C- 114 379
- GB-A- 521 804
- GB-A- 1 179 575
- RU-C2- 2 165 042
- US-A1- 2002 091 026

## Description

### BACKGROUNG-FIELD OF INVENTION

This invention relates to variable torque/speed transmission, specifically to a variable transmission where the transmission ratio can be varied continuously between any two predetermined values.

### BACKGROUNG-DESCRIPTION OF PRIOR ART

The inventions of this disclosure are applicable to friction dependent and non-friction dependent CVT's constructed out of the cones and cone assemblies described in US Patent 7,722,490 B2, which are: a single tooth cone, a cone with two opposite teeth, a cone with one torque transmitting member, and a cone with two opposite torque transmitting members. Two "cone with two opposite teeth" or two "cone with two opposite torque transmitting members" can be used to construct a CVT 1, two "single tooth cone" and two "cone with one torque transmitting member" can be used to construct a CVT 2; and one "cone with two opposite teeth" or one "cone with two opposite torque transmitting members" can be used to construct a CVT 3.

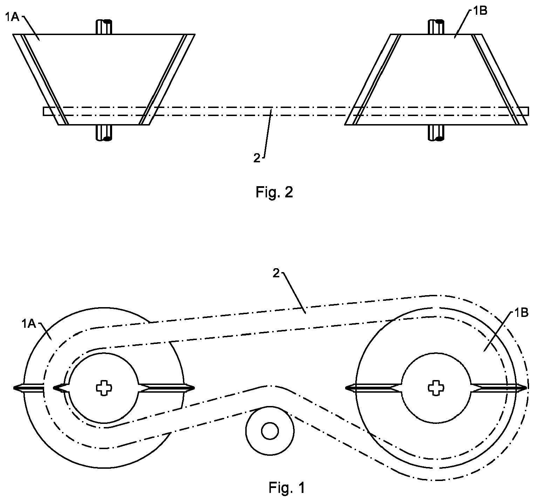

### CVT1 (Figs. 1 to 4)

A CVT 1, which is shown in Figs. 1 to 4, comprises of a cone with two opposite teeth, labeled as cone with two opposite teeth 1A, mounted on one shaft/spline that is coupled to another cone with two opposite teeth, labeled as cone with two opposite teeth 1B, mounted on another shaft/spline by a transmission belt 2. If desired, a CVT 1 can also be constructed using two "cone with two opposite torque transmitting members" instead of two "cone with two opposite teeth".

The transmission ratio of a CVT 1 can be changed by changing the axial position of the cones relative to the transmission belt, which is achieved by changing the axial position of the cones and holding fixed the axial position of the transmission belt; or if desired the transmission ratio can also be changed by changing the axial position of the transmission belt and holding fixed the axial position of the cones.

It is recommended that the transmission ratio of a CVT 1 is only changed when both cones of the CVT are in a moveable position. A moveable position of a cone is a position where only one tooth/torque transmitting member of that cone is engaged with its transmission belt for torque transmission. Changing the transmission ratio when both cones are in a moveable position can avoid significant stretching of the transmission belt (if toothed torque transmission is used as is the case for the CVT 1 shown in Figs. 1 to 4) and wear and energy loses (if friction torque transmission is used).

A CVT 1 can also be constructed using two "cone with two opposite torque transmitting members" instead of two "cone with two opposite teeth".

### CVT 2 (Fias. 5 to 8)

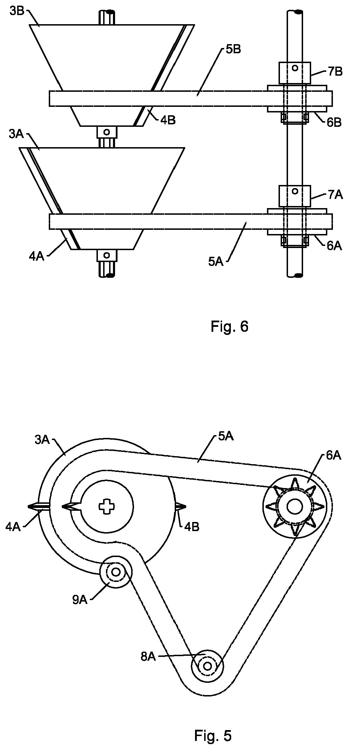

A CVT 2 mainly consists of two single tooth cones, labeled as single tooth cone 3A and single tooth cone 3B in Figs. 5, 6, 7, and 8, that are mounted on one shaft/spline that are each coupled by a toothed transmission belt to a toothed transmission pulley mounted on another shaft/spline.

Each single tooth cone has one tooth that is used for torque transmission that elongates from a smaller diameter of the cone to a larger diameter of the cone. Since each single tooth cone only has one tooth, in order to ensure that at any instance during the operation of the CVT 2 at least one tooth is engaged with its transmission belt so as to ensure continual torque transmission, the tooth of single tooth cone 3A is positioned substantially opposite of the tooth of single tooth cone 3B (substantially opposite doesn't necessarily mean exactly 180 degrees apart, although exactly 180 degrees apart is preferable). So that in instances when single tooth cone 3A is positioned such that its tooth is not covered by its transmission belt, so that single tooth cone 3A is not transmitting torque; for single tooth cone 3B, its tooth is covered by its transmission belt, so that single tooth cone 3B is transmitting torque, which is due to the engagement between its tooth and its transmission belt. And in instances when single tooth cone 3B is positioned such that its tooth is not covered by its transmission belt, so that single tooth cone 3B is not transmitting torque; for single tooth cone 3A, its tooth is covered by its transmission belt, so that single tooth cone 3A is transmitting torque, which is due to the engagement between its tooth and its transmission belt. In addition, there can also exist overlapping instances where the tooth of single tooth cone 3A and the tooth of single tooth cone 3B are both engaged with their transmission belt, and hence transmit torque, at the same time.

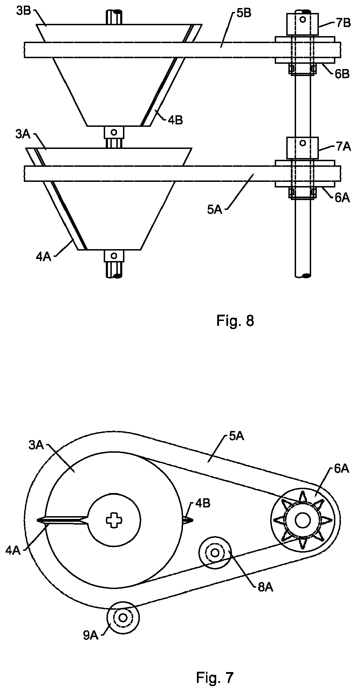

A CVT 2 where the transmission belts are positioned near the smaller end of their single tooth cones is shown as a partial top-view in Fig. 6 and as a partial front-view in Fig. 5; and a CVT 2 where the transmission belts are positioned near the larger end of their single tooth cones is shown as a partial top-view in Fig. 8 and as a partial front-view in Fig. 7.

In the figures, the single tooth cones are labeled as single tooth cone 3A and single tooth cone 3B, the teeth of the single tooth cones are labeled as tooth 4A and tooth 4B, the transmission belts are labeled as transmission belt 5A and transmission belt 5B, the transmission pulleys are labeled as transmission pulley 6A and transmission pulley 6B, and the adjusters are labeled as adjuster 7A and adjuster 7B.

In the figures, transmission belt 5A and transmission belt 5B are not accurately drawn, hence the teeth of the transmission belts are not shown. Slightly modified silent chains or inverted teeth chains, which each have a tapered base that matches the taper of its single tooth cone instead of a level base, can be used as a transmission belt 5A and a transmission belt 5B.

In Figs. 5 and 7, a tensioning pulley 8A, which is used to maintain the proper tension in transmission belt 5A as the transmission ratio is changed, is also shown. Although not shown, an identical tensioning pulley, positioned in the same relative position relative to its single tooth cone, also exists for transmission belt 5B. If desired, the tensioning pulleys can be replaced with idler pulleys, which move into the proper position as to maintain proper tension in their transmission belts as the transmission ratio is changed. Here sliders and slides, electronic/hydraulic positioning, etc. can be used to position the idler pulleys. More details regarding this is described in US Patent 7,722,490 B2.

And in Figs. 5 and 7, a support pulley 9A for transmission belt 5A, which is used with an identical support pulley for transmission belt 5B (not shown) to ensure that at least one tooth of the single tooth cones is always engaged with its transmission belt during the operation of the CVT 2, is also shown. If the transmission ratio range of the CVT 2 is limited such that at least one tooth of the single tooth cones is always engaged with its transmission belt for all transmission ratios of the CVT 2 without the need of the support pulleys, then the support pulleys can be omitted.

In Figs. 5, 6, 7, and 8, the single tooth cones are mounted on a spline. This allows the axial positions of the single tooth cones to be changed relative to the axial position of said spline and hence also relative to the axial positions of their transmission belts and their transmission pulleys. The transmission ratio of the CVT 2 can be changed by changing the axial positions of the single tooth cones relative to the axial positions of their transmission belts and their transmission pulleys. Various guides, pulleys, or other devices that prevent/restrict axial movements of the transmission belts can be used to help maintain the axial position of the transmission belts. The need for maintaining the axial position of a transmission belt also exist in many other devices of prior art, and the methods used there can most likely also be used here, trial and error can be used to make sure; and more details regarding this is described in US Patent 7,722,490 B2.

In Figs. 5, 6, 7, and 8, both transmission pulleys are mounted on their shaft through the use of an adjuster, if desired only one transmission pulley can be mounted on its shaft through the use of an adjuster. Or instead of using adjusters to mount one or both transmission pulleys to their shaft, one or both single tooth cones can be mounted on their shaft/spline through the use of an adjuster. The adjuster(s) are used to provide adjustments to eliminate/reduce transition flexing and/or adjustments to compensate for transmission ratio change rotation. If desired a CVT 2 without any adjusters can also be designed.

Regarding adjustments to eliminate/reduce transition flexing, in instances where the arc length between tooth 4A and tooth 4B for the diameter of single tooth cone 3A and single tooth cone 3B where their transmission belts are positioned is not a multiple of the width of a tooth (the width of a tooth refers to the width of tooth 4A, which should have the same width as tooth 4B), where multiple of the width of a tooth means an arc length of 1 tooth, 2 teeth, 3 teeth, and so forth, such as length 3-1/3 teeth for example, then the combination of single tooth cone 3A and single tooth cone 3B resemble a sprocket where the number of teeth is not an integer so that it has a partial tooth, such as sprocket with 5-1/4 teeth, 7-1/8 teeth, or 3-1/3 teeth for example; where the partial tooth is removed and does not engage with the chain of the sprocket.

For a sprocket with a partial tooth, the tooth positioned immediately after the partial tooth will not engage properly with its chain since that tooth will either be too early or too late relative to its chain. Likewise, in instances where the arc length between tooth 4A and tooth 4B for the diameter of single tooth cone 3A and single tooth cone 3B where their transmission belts are positioned is not a multiple of the width of a tooth, then the tooth about to be engaged will not engage properly with its transmission belt and flexing of that transmission belt, referred to as transition flexing, will occur.

Transition flexing can be eliminated by adjusting the rotational position of the transmission belt that is about to be engaged relative to rotational position of the tooth with which it will engage. For example, let's say tooth 4A is positioned too late relative to its transmission belt 5A. Here in order to eliminate transition flexing, transmission belt 5A can be rotated away from tooth 4A, so that tooth 4A is positioned just right relative to its transmission belt for proper engagement to occur. Another example, let's say tooth 4A is positioned too early relative to its transmission belt 5A. Here in order to eliminate transition flexing, transmission belt 5A can be rotated towards tooth 4A, so that tooth 4A is positioned just right relative to its transmission belt for proper engagement to occur.

In order adjust the rotational position of transmission belt 5A relative to its single tooth cone 3A, and hence also relative to its tooth 4A, adjuster 7A, adjuster 7B, or both adjusters can be used (see Figs. 6 & 8). Regarding this, since the rotational position of single tooth cone 3A relative to single tooth cone 3B is fixed, in instances where single tooth cone 3B is engaged with its transmission belt 5B, the rotational position of single tooth cone 3A, which is currently not engaged with its transmission belt 5A, depends on the rotational position of transmission belt 5B. Hence by adjusting the rotational position of the currently not engaged transmission belt 5A relative to transmission belt 5B, the rotational position of transmission belt 5A relative to single tooth cone 3A is also adjusted. And the rotational position of transmission belt 5A can be adjusted relative to transmission belt 5B by adjusting the rotational position of transmission pulley 6A relative to transmission pulley 6B using adjuster 7A, adjuster 7B, or both. In the same manner, the rotational position of transmission belt 5B relative to its single tooth cone 3B, and hence also relative to its tooth 4B, can be adjusted using adjuster 7A, adjuster 7B, or both.

Although transition flexing can be eliminated using the adjusters, if desired the transmission ratios where transition flexing occurs can be skipped.

Regarding adjustments to compensate for transmission ratio change rotation, in instances where both tooth 4A and tooth 4B are engaged with their transmission belts at the same time, the transmission ratio cannot be changed without some significant amount of stretching in the transmission belts, which is undesirable.

Here depending on the rotational position of a tooth of a single tooth cone, changing the transmission ratio when that tooth is engaged with its transmission belt applies a force that tends to rotate the single tooth cone of that tooth clockwise or counter-clockwise a certain amount. And since for a CVT 2 both single tooth cones are fixed to the same shaft and the rotation due to transmission ratio change for the single tooth cones are different due to that fact that the rotational position of their tooth is different, here changing the transmission ratio when tooth 4A and tooth 4B are both engaged with their transmission belt will stretch the transmission belts.

This type of stretching of the transmission belts can be eliminated by rotating the transmission belts relative to each other accordingly using adjuster 7A, adjuster 7B, or both adjusters so as to compensate for the difference in the applied rotation due to transmission ratio change of the single tooth cones.

Here the adjusters are used to rotate the transmission pulleys relative to each other which in turn rotates the transmission belts relative to each other. If the transmission pulleys are mounted on the input shaft, then if an adjuster rotates its transmission pulley in the direction opposite of the direction of rotation of the input shaft, then the adjuster only needs to provide a releasing torque. For a releasing torque situation, torque is only needed to overcome friction; lowering a weight using a winch is another example of a releasing torque situation; while raising a weight is not. And if the transmission pulleys are mounted on the output shaft, then if an adjuster rotates its transmission pulley in the direction of rotation of the output shaft, then the adjuster also only needs to provide a releasing torque.

In order to compensate for the difference in the applied rotation due to transmission ratio change of the single tooth cones, only the adjuster that needs to provide a releasing torque needs to be activated. For example, rotating transmission belt 5A clockwise relative transmission belt 5B can be achieved either by rotating transmission pulley 6A clockwise relative to transmission pulley 6B or by rotating transmission pulley 6B counter-clockwise relative to transmission pulley 6A. Here if rotating a transmission pulley in the counter-clockwise direction requires only a releasing torque than only adjuster 7B can be activated; and if rotating transmission pulley in the clockwise direction requires only a releasing torque than only adjuster 7A can be activated. The energy required for a releasing torque is insignificant; hence the adjusters will likely consume less energy than a windshield wiper motor.

Here when activated, the adjuster that needs to provide a releasing torque rotates its transmission pulley faster than the speed required to compensate for the difference in the applied rotation due to transmission ratio change of the single tooth cones during transmission ratio change. Here if compensating adjustment is required, the adjuster will provide the required adjustments (the adjuster will slow down or slip if it rotates faster than the required compensating adjustment), and if compensating adjustment is not required the adjusters will simply stall or slip and slightly increase the tension in the transmission belts to an acceptable limit.

The transmission ratio can be changed when only one tooth of a single tooth cone is engaged with its transmission belt; and the adjusters can provide compensation that allows the transmission ratio to be changed when both teeth of the single tooth cones are engaged; so theoretically, through the use of the adjusters there are no instances where the transmission ratio cannot be changed.

For adjuster 7A and adjuster 7B, a small low power electric motor can be used, since the adjusters only need to overcome frictional resistance. Here an electric motor can be used to drive a worm gear that drives a spur gear that rotates the output shaft of its adjuster; so that the adjuster can lock its output shaft relative to its body when the electric motor is not activated; this is required in order to transmit torque from a "transmission pulley" to "the output shaft of its adjuster" to "the body of its adjuster" and finally to "the shaft on which the body of it adjuster is fixed". Here in order to allow for large torque transmission, double enveloping worm gear-spur gear drives, such as used in high-torque speed reducers, can be used.

In order to control the adjusters a controlling computer receives input from a rotational position sensor that monitors the rotational position of the single tooth cones shaft, a rotational position sensor that monitors the rotational position of transmission pulley 6A relative to transmission pulley 6B, and a transmission ratio sensor.

The adjustment methods to eliminate/reduce transition flexing and to compensate for transmission ratio change rotation for a CVT 2 using "cones with on one torque transmitting member each" can also be used for a CVT 2 using "cones with one single tooth each (single tooth cones)". Both a "cone with on one torque transmitting member" and a "cone with one single tooth (single tooth cone)" have only one circumferential section of their cone that is toothed, which we refer to as the "toothed section". For a CVT 2, said adjustment methods do not depend on the amount of teeth in a said "toothed section", so the adjustment methods for a CVT 2 using "cones with on one torque transmitting member each" can also be used for a CVT 2 using "cones with one single tooth each (single tooth cones)", this is certainly true for the adjustment method to eliminate/reduce transition flexing and the over adjustment method to compensate for transmission ratio change rotation. Detailed descriptions regarding said adjustment methods can be found in US Patent 7,722,490 B2.

If desired a CVT 2 with no adjusters can also be constructed. For this CVT 2 the transmission ratios where transition flexing occur can be skipped, the transmission ratio of the CVT can be maintained at a transmission ratio where no transition flexing occur, and/or transmission belts that are designed to allow sufficient flexing to account for transition flexing can be used.

If adjustments to compensate for transition flexing is provided by rotating one transmission pulley relative to another so as to adjust the rotational position of a transmission belt relative to its cone, then it is recommended that adjustments to compensate for transition flexing are provided in the direction of rotation that increases the tension in the tense side of said transmission belt. Here if the transmission pulleys are mounted on the input shaft then said transmission belt should be rotated in the direction of rotation of the input shaft relative to its cone, and if the transmission pulleys are mounted on the output shaft then said transmission belt should be rotated in the opposite direction of rotation of the output shaft relative to its cone.

If adjustment to compensate for transition flexing is provided in the direction of rotation that decreases the tension in the tense side of a transmission belt which rotational position is adjusted relative to its cone, then said adjustment will increase the tension in the slack side of said transmission belt. Here depending on the friction between said transmission belt and its cone, the adjustment provided might change the position of the tensioning pulley (if used instead of an idler pulley) of said transmission belt and this can decrease the accuracy and increase the response time of the adjustment provided. Here experimentation can be performed to determine whether this will significantly reduce the performance and reliability of the CVT.

A CVT 2 can also be constructed using two "cone with one torque transmitting member" instead of two "single tooth cones".

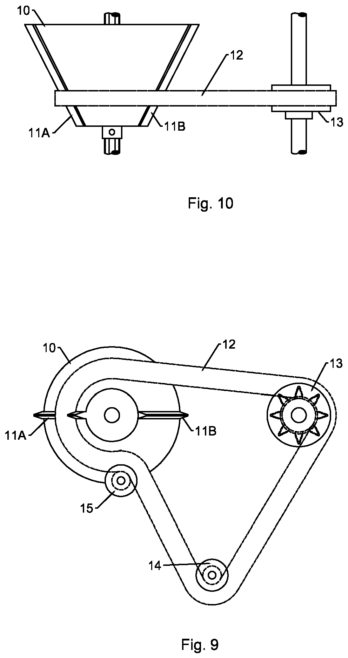

### CVT 3 (Figs. 9 to 12)

A CVT 3 mainly consists of a cone with two oppositely positioned teeth (oppositely positioned teeth doesn't mean that the teeth have to be positioned exactly 180 degrees apart, but 180 degrees apart or close to 180 degrees apart), labeled as opposite teeth cone 10 in Figs. 9, 10, 11, and 12, that is mounted on a shaft/spline that is coupled by a toothed transmission belt to a toothed transmission pulley mounted on another shaft/spline. Each tooth of said opposite teeth cone 10 elongates from a smaller diameter of the cone to a larger diameter of the cone.

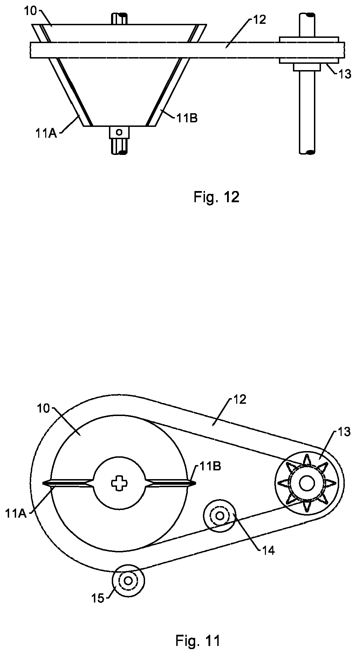

A CVT 3 where the transmission belt is positioned near the smaller end of its cone with two oppositely positioned teeth is shown as a partial top-view in Fig. 10 and as a partial front-view in Fig. 9; and a CVT 3 where the transmission belt is positioned near the larger end of its cone with two oppositely positioned teeth is shown as a partial top-view in Fig. 12 and as a partial front-view in Fig. 11.

In the figures, the teeth of opposite teeth cone 10 are labeled as tooth 11A and tooth 11B, the transmission belt is labeled as transmission belt 12, and the transmission pulley is labeled as transmission pulley 13.

In the figures, transmission belt 12 is not accurately drawn; hence the teeth of the transmission belt are not shown. Slightly modified silent chains or invert teeth chains, which each have a tapered base that matches the taper of its single tooth cone instead of a level base, can be used as transmission belt 12.

In Figs. 11 and 9, a tensioning pulley 14, which is used to maintain the proper tension in transmission belt 12 as the transmission ratio is changed, is also shown. If desired it can be replace with an idler pulley, which moves into the proper position as the transmission ratio is changed. Here sliders and slides, electronic/hydraulic positioning, etc. can be used to position the idler pulley. More details regarding this is described in US Patent 7,722,490 B2.

And in Figs. 9 and 11, a support pulley 15 for transmission belt 12 that is used to ensure that at least one tooth of opposite teeth cone 10 is always engaged with transmission belt 12 during the operation of the CVT 3, is also shown. If the transmission ratio range of the CVT 3 is limited such that at least one tooth of opposite teeth cone 110 is always engaged with transmission belt 12 for all transmission ratios of the CVT 3 without the need of the support pulleys, then the support pulleys can be omitted.

In Figs. 9, 10, 11, and 12, opposite teeth cone 10 is mounted on a spline. This allows the axial position of opposite teeth cone 10 to be changed relative to the axial position of said spline and hence also relative to the axial positions of its transmission belt and its transmission pulley. And the transmission ratio of the CVT 3 can be changed by changing the axial position of the opposite teeth cone 10 relative to the axial positions of its transmission belt and its transmission pulley. Various guides, pulleys, or other devices that prevent/restrict axial movements of the transmission belt can be used to help maintain the axial position of the transmission belt. The need for maintaining the axial position of a transmission belt also exist in many other devices of prior art, and the methods used there can most likely also be used here, trial and error can be used to make sure; and more details regarding this is described in US Patent 7,722,490 B2.

The CVT 3 shown in Figs. 9, 10, 11, and 12 does not use an adjuster, hence no adjustments to eliminate/reduce transition flexing can be provided. Therefore for the CVT 3 shown in Figs. 9, 10, 11, and 12, the transmission ratios where transition flexing occur can be skipped, the transmission ratio of the CVT can be maintained at a transmission ratio where no transition flexing occur, and/or a transmission belt that is designed to allow sufficient flexing to account for transition flexing can be used.

If desired a CVT 3 that uses a "cone with one fixed tooth and one oppositely positioned adjustable tooth" can be used instead of a "cone with two oppositely positioned fixed teeth". For a "cone with one fixed tooth and one oppositely positioned adjustable tooth", the "adjustable tooth" can be coupled to an adjuster as is done for an "adjustable torque transmitting member" of a "cone assembly with one fixed torque transmitting member and one oppositely positioned adjustable torque transmitting member" described in US Patent 7,722,490 B2.

The adjustment method to eliminate/reduce transition flexing for a "cone with one fixed tooth and one oppositely positioned adjustable tooth" is identical to the adjustment methods to eliminate/reduce transition flexing for a "cone assembly with one fixed torque transmitting member and one oppositely positioned adjustable torque transmitting member". Both a "cone assembly with one fixed torque transmitting member and one oppositely positioned adjustable torque transmitting member" and a "cone with one fixed tooth and one oppositely positioned adjustable tooth" have two oppositely positioned circumferential section on their cone that are toothed, which we refer to as a "toothed section" (oppositely positioned "toothed sections" doesn't mean that the "toothed sections" have to be positioned exactly 180 degrees apart, but 180 degrees apart or close to 180 degrees apart; if one "toothed section" is adjusted relative to the other "toothed section", then there should be instances where the "toothed sections" are not positioned exactly 180 degrees apart). Said adjustment method do not depend on the amount of teeth in a said "toothed section", so the adjustment method to eliminate/reduce transition flexing for a "cone with one fixed tooth and one oppositely positioned adjustable tooth" is identical to the adjustment method to eliminate/reduce transition flexing for a "cone assembly with one fixed torque transmitting member and one oppositely positioned adjustable torque transmitting member".

The adjustment methods to eliminate/reduce transition flexing for a "cone assembly with one fixed torque transmitting member and one oppositely positioned adjustable torque transmitting member" is described in US Patent 7,722,490 B2 for a cone assembly of a CVT 1.1, which is also applicable for a cone assembly of a CVT 3 that has a cone/cone assembly with on fixed and one oppositely positioned adjustable "toothed section".

Also for the adjustment method to eliminate/reduce transition flexing, the adjustments provided to the adjustable "toothed section" is very little. So that after a said adjustment is provided from a relative rotational position where the "toothed sections (teeth or torque transmitting members)" are exactly or almost exactly opposite, the "toothed sections" are still substantially oppositely positioned. In order to ensure that the "toothed sections" are always substantially oppositely positioned, it is recommended that the "toothed sections" are returned to the relative rotational position where the "toothed sections" are exactly or almost exactly opposite positioned every time after a said adjustment has been provided, so that every time before a said adjustment is provided, the "toothed sections" are exactly or almost exactly opposite positioned.

The operation of the mover adjusters in order to substantially increase the duration at which the transmission ratio can be changed for a cone assembly of a CVT 1.1 described in Patent 7,722,490 B2 can also be used for a cone/cone assembly of a CVT 3. All methods devices described for one can be used for all CVT's.

A CVT 3 can also be constructed using a "cone with two opposite torque transmitting members" instead of a "cone with two opposite teeth".

### Other Prior Arts

The following prior arts that might also relevant:
- Patent #: 7,713,153; Issue Date: 11 May 2010; Patentee: Naude.
- Closest prior art document US 2002/091026; Pub. Date: 11 Jul 2002; Applicant: Tay Armin S. Patent App, Pub. # US 2002/091026 discloses a CVT which is similar to a CVT 1 and a CVT 4 of this application. But Patent App. Pub. # US 2002/091026 does not disclose the "Method for Increasing Duration Through Independent Axial Position Change" of this Application. Nor can the "Method for Increasing Duration Through Independent Axial Position Change" of this Application be implemented on a CVT of Patent App, Pub. # US 2002/091026; despite the fact that this method can provide significant improvements that can be essential for the success of the CVT.

The reason why the "Method for Increasing Duration Through Independent Axial Position Change" of this Application cannot be implemented on a CVT of Patent App. Pub. # US 2002/091026 is because the CVT of Patent App. Pub. # US 2002/091026 has the following design features: a) The slider bushing 55 on the driver shaft 12 and the slider bushing 55 on the driven shaft 14 are rigidly connected using a connector 75. in order to change the transmission ratio, an actuator, will be used to change the axial position of the connector 75. This configuration will not allow independent axial position changing of the driver cone and driven cone (see Fig. 5A). And, b) The CVT does not have a tensioning pulley that can provide and/or remove slack in the transmission belt so as to allow the axial positions of the driven cone and driving cone to be changed independent of each other (see Fig. 5B).

Furthermore, the tensioning pulleys shown in Figs. 6D and 6C of Patent App. Pub. # US 2002/091026 are used in a CVT 2 to remove and provide transmission belt slack due to the transmission diameter change of cone 26B (see Figs. 6C and 6D). A CVT 2 has two CVTs, but each CVT only uses 1 cone (see Figs. 6A and 6B), as such transmission belt slack that is provided due the transmission diameter decrease of cone 26B cannot be compensated for by the transmission belts slack that is removed due the transmission diameter increase of a cone to which cone 26B is coupled.

### BRIEF SUMMARY OF THE INVENTION

Methods and devices for improving the performance of CVT's (Continuous Variable Transmissions) that utilize a cone with one torque transmitting member, a cone with two opposite torque transmitting members, cone with one tooth (single tooth cone), and a cone with two opposite teeth.

Said methods and devices include but are not limited to: a mechanism for changing the axial position of a cone quickly and accurately (see Fig. 15), a method for substantially increasing the duration at which the axial position of a cone can be changed (see Figs. 27 to 30), and a flat belt with teeth transmission belt (see Figs. 40 to 42).

Said Method and devices can allow for the construction of a CVT that replaces automatic and manual transmissions as the transmission of choice. Since a CVT can provide more gear ratios than manual and automatic transmissions, this will result in better performance and fuel efficiency of cars. This is a solution that is long felt needed and has been often attempted without success.

### BRIEF DESCRIPTION OF THE SEVERAL VIEWS OF THE DRAWING

Fig. 1 shows a front-view of CVT 1.
Fig. 2 shows a partial top-view of CVT 1.

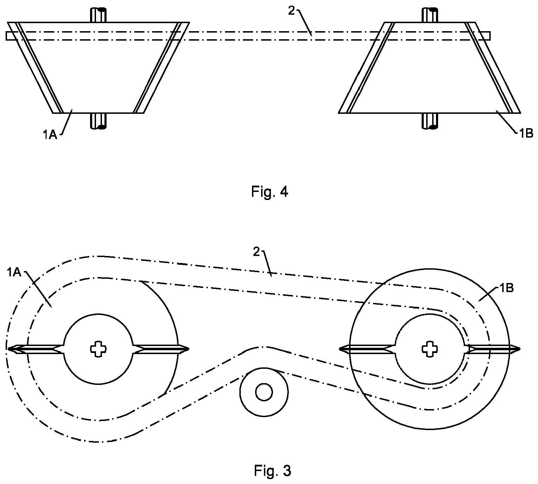

Fig. 3 shows another front-view of CVT 1.
Fig. 4 shows another partial top-view of CVT 1.
Fig. 5 shows a partial front-view of CVT 2 where the transmission belts are positioned near the smaller end of their single tooth cones.
Fig. 6 shows a partial top-view of CVT 2 where the transmission belts are positioned near the smaller end of their single tooth cones.
Fig. 7 shows a partial front-view of CVT 2 where the transmission belts are positioned near the larger end of their single tooth cones.
Fig. 8 shows a partial top-view of CVT 2 where the transmission belts are positioned near the larger end of their single tooth cones.
Fig. 9 shows a front-view of CVT 3 where the transmission belt is positioned near the smaller end of its cone with two oppositely positioned teeth.
Fig. 10 shows a partial top-view of CVT 3 where the transmission belt is positioned near the smaller end of its cone with two oppositely positioned teeth.
Fig. 11 shows a front-view of CVT 3 where the transmission belt is positioned near the larger end of its cone with two oppositely positioned teeth.
Fig. 12 shows a partial top-view of CVT 3 where the transmission belt is positioned near the larger end of its cone with two oppositely positioned teeth.

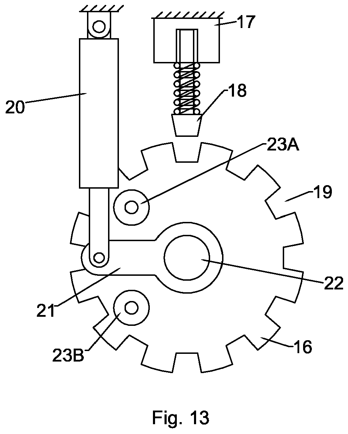

Fig. 13 shows a front-view of a Lever Indexing Mechanism.

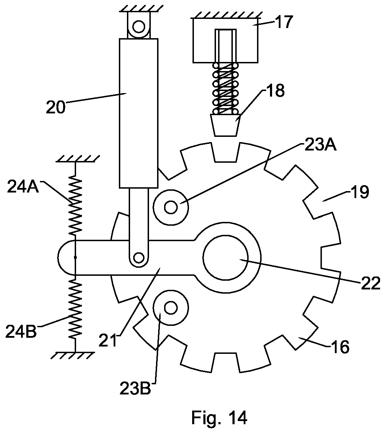

Fig. 14 shows a front-view of a Lever Indexing Mechanism for which the force on the actuator lever 21 is assisted by tension springs.

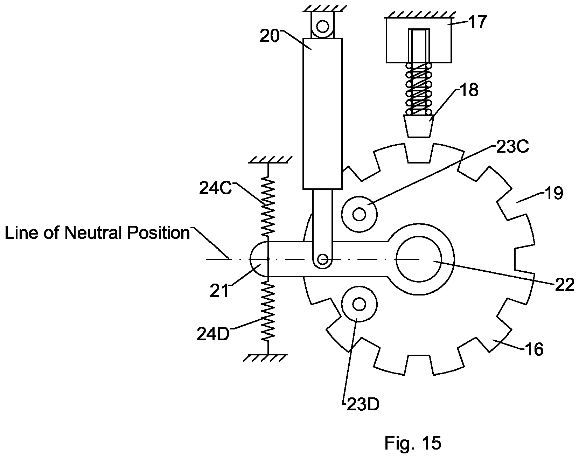

Fig. 15 shows a front-view of a Lever Indexing Mechanism 2.

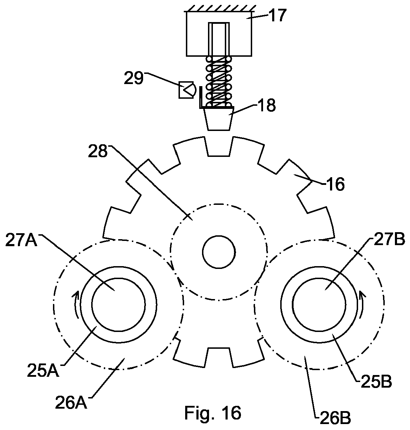

Fig. 16 shows a front-view of a System Driven Indexing Mechanism

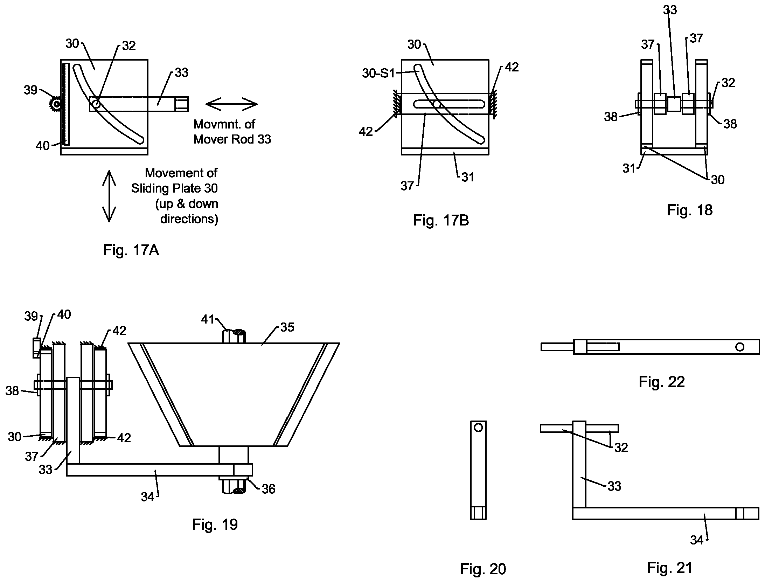

Figs. 17A and 17B show a partial side-view of a "mover sliding plate mechanism".
Fig. 18 shows a partial end-view of a "mover sliding plate mechanism".
Fig. 19 shows a partial top-view of a "mover sliding plate mechanism".
Fig. 20 shows as a side-view of a mover rod 33.
Fig. 21 shows as a top-view of a mover rod 33.
Fig. 22 shows as a front-view of a mover rod 33.

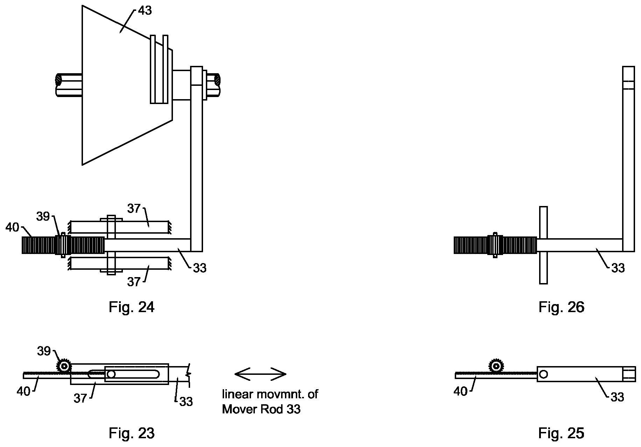

Fig. 23 shows a partial side-view of a "straight rotation to linear converting mover mechanism".
Fig. 24 shows a top-view of a "straight rotation to linear converting mover mechanism".
Fig. 25 shows a side-view of a mover rod 33 to which a gear rack 40 is attached.
Fig. 26 shows a top-view of a mover rod 33 to which a gear rack 40 is attached.

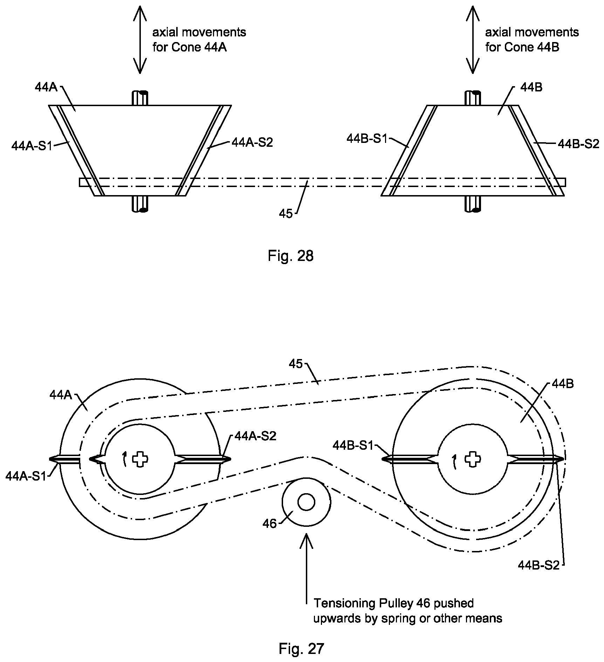

Fig. 27 shows a front-view of CVT 1A.
Fig. 28 shows a partial top-view of CVT 1A.

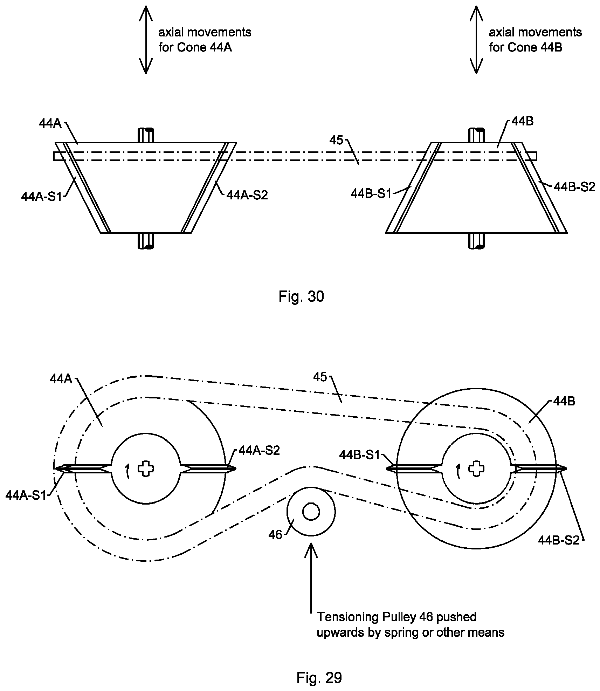

Fig. 29 shows another front-view of CVT 1A.
Fig. 30 shows another partial top-view of CVT 1A.

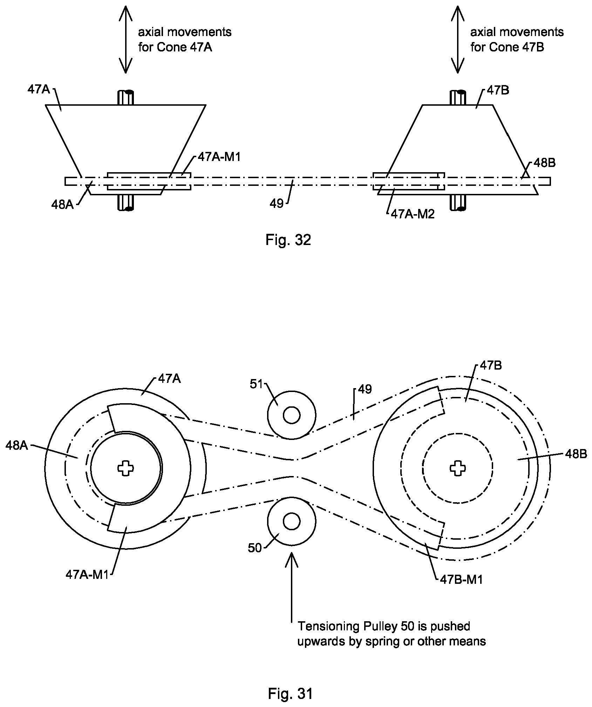

Fig. 31 shows a front-view of CVT 4.
Fig. 32 shows a partial top-view of CVT 4.

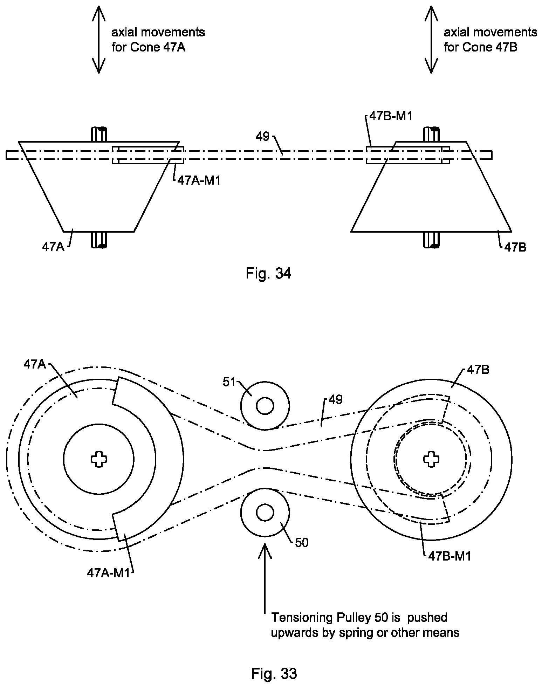

Fig. 33 shows another front-view of CVT 4.
Fig. 34 shows another partial top-view of CVT 4.

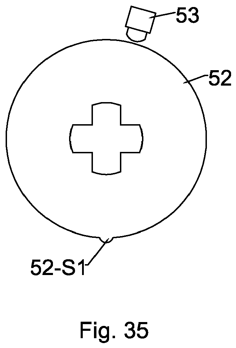

Fig. 35 shows a front-view of "marked wheel and a marked wheel sensor system".

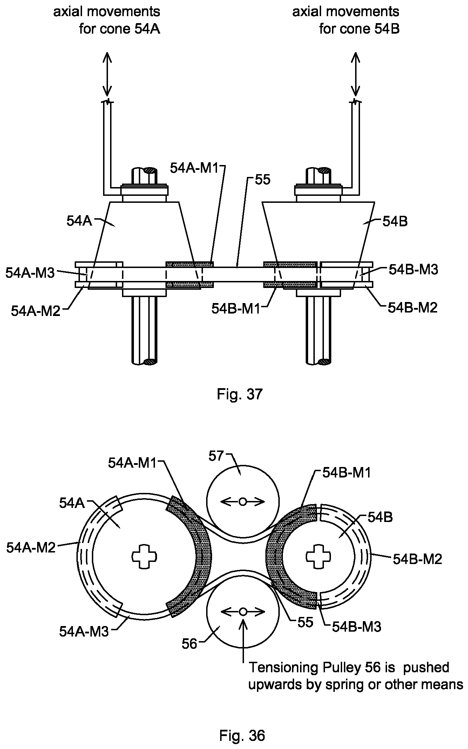

Fig. 36 shows a front-view of a preferred CVT 4.
Fig. 37 shows a partial top-view of a preferred CVT 4.

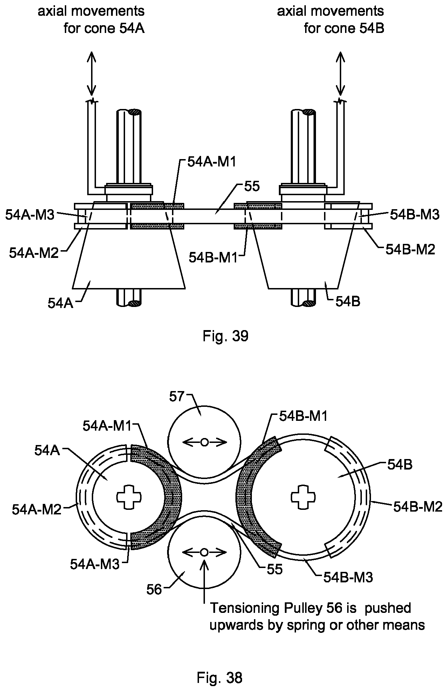

Fig. 38 shows another front-view of a preferred CVT 4.
Fig. 39 shows another partial top-view of a preferred CVT 4.

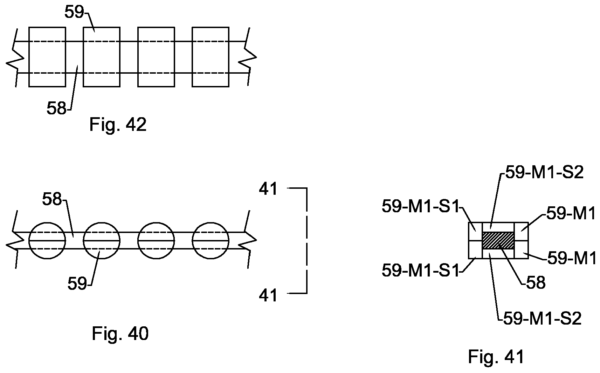

Fig. 40 shows as a side-view of a flat belt with teeth transmission belt.
Fig. 41 shows as a sectional-view of a flat belt with teeth transmission belt.
Fig. 42 shows as a top-view of a flat belt with teeth transmission belt.

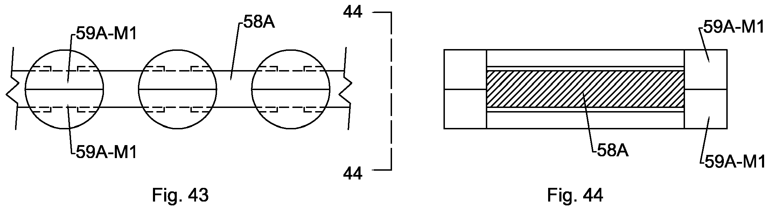

Fig. 43 shows as a side-view of an alternate flat belt with teeth transmission belt.
Fig. 44 shows as a sectional-view of an alternate flat belt with teeth transmission belt.

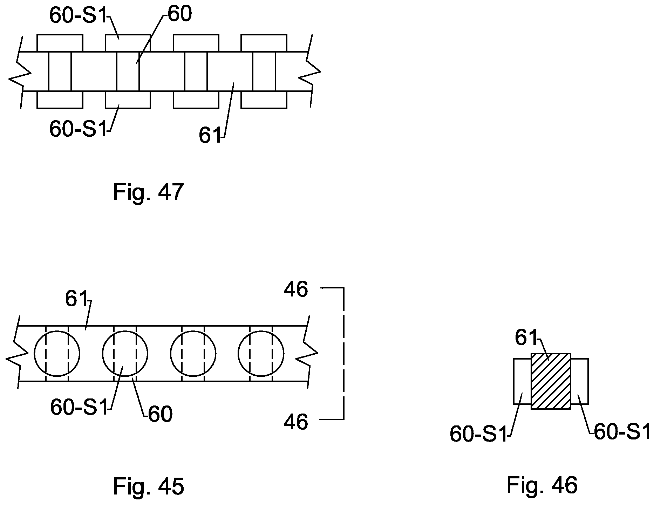

Fig. 45 shows as a side-view of a teeth block transmission belt.
Fig. 46 shows as a sectional-view of a teeth block transmission belt.
Fig. 47 shows as a top-view of a teeth block transmission belt.

### REFERENCE NUMERALS IN DRAWINGS

For the reference numerals in this disclosure, the label M# after a reference numeral, where # is a number, such as M2 for example, is used to label a member of a part that is given a reference numeral. For example, member 5 of a part 8 is labeled as 8-M5.

And the label S# after a reference numeral, where # is a number, such as S2 for example, is used to label the shape of a part that is given a reference numeral. For example, shape 8 of a part 27 is labeled as 27-S8.

### DETAILED DESCRIPTION OF THE INVENTION

### Transmission Ratio Changing Mechanisms

Below is described a "lever indexing mechanism", a "lever indexing mechanism 2" and a "system driven indexing mechanism". These mechanisms provide quick and accurate fixed interval rotational movements that can be converted into quick and accurate fixed interval linear movements that can be used to change the axial position of a cone, transmission belt, transmission pulley, etc. of a CVT 1, CVT 2, CVT 3, CVT 4, and other CVT's where these mechanisms can be useful.

In order to convert the rotational movements of these mechanism into linear movements, the rotation of the index wheel 16 of these mechanisms can be used to rotate the gear of a gear-gear rack drive that is used for axial position changing, or to rotate the gear of the gear-gear rack drive of a "mover sliding plate mechanism", which is described later, that is used for axial position changing.

### Lever Indexing Mechanism (Fig. 13)

A lever indexing mechanism, which is shown in Fig. 13, has an index wheel 16 that can be locked and unlocked by a locking-unlocking solenoid 17. Here activating the locking-unlocking solenoid 17 will pull a lock 18 out of its cavity 19 and towards the locking-unlocking solenoid 17 so as to release the index wheel 16. Other mechanisms for locking-unlocking an index wheel can also be used, such as linear actuators, ratcheting mechanisms (if the index wheel is only released in one rotational direction), etc.

Here in order to rotate the index wheel 16, a linear actuator is used 20. In order to transfer the force of a linear actuator 20 to the index wheel 16 an actuator lever 21 is used. Actuator lever 21 has a clutch that can be used by a controller/controlling computer to controllably engage and disengage actuator lever 21 with index wheel 16. When the clutch is engaged, rotation from the actuator lever 21 is transferred to index wheel 16; and when the clutch is disengaged, actuator lever 21 is allowed to rotate relative to index wheel 16.

The recommended clutch to be used for the actuator lever 21 is a jaw clutch 22, although other clutches that can be controllably engaged and disengaged by the controller/controlling computer can also be used. A jaw clutch 22 can comprise of two jaw gears, one fixed for rotation relative to the index wheel 16 and the other fixed for rotation relative to the actuator lever 21, that can be pushed together so as to have the clutch engaged and pushed apart so as to have the clutch disengaged. A jaw gear can be shaped like a flat washer that has at least one flat surface that is toothed. The toothed surfaces of the jaw gear of the index wheel 16 and the jaw gear of the actuator lever 21 face each other and can be made to engage and disengage through the use of a solenoid and a spring or other actuators. Here when engaged, no significant relative rotational movements between the jaw gears should occur.

The linear actuator 20 is connected to the actuator lever 21 so that it can turn the actuator lever 21 clockwise and counter-clockwise. Any type of linear actuator, such as pneumatic, hydraulic, or solenoids can be used as the linear actuator 20. If solenoids are used, then the linear actuator probably consists of two solenoids that can pull in opposite directions, unless a solenoid that can push and pull is used.

If desired, the actuator lever 21 can also be rotated using a rotary actuator, or other means for rotating a lever. If desired, the actuator lever 21 can also be driven by the system. For example, for a CVT 2, the actuator lever can be driven by rotation of the shaft/spline of the cones (single tooth cones). Here the rotating motion of the shaft/spline of the cones can be converted into reciprocating motion using a mechanism (many well know mechanisms that an accomplish this are known), this reciprocating motion can then be used to rotate the actuator lever clockwise and counter-clockwise as required. Here the timing of the clutch has to be accurate.

In order to avoid large shock loads, the force of the linear actuator or rotary actuator used to rotate the actuator lever 21 can be reduced when it is about to hit a stop or when it has traveled a set amount of distance. Here if pneumatics or hydraulics is used as the linear actuator 20, then a pressure relief can be used for such purpose.

In order to provide the required amount of rotation, the clockwise and counter-clockwise rotation of the actuator lever 21 is limited by a stop 23A and a stop 23B, which are fixed relative to a frame and not the index wheel 16. Here it is recommended that "the amount of rotation of the actuator lever 21 as it is moved from a position where it is in contact with stop 23A to the position where it is in contact with stop 23B" and "the amount of rotation of the actuator lever 21 as it is moved from a position where it is in contact with stop 23B to the position where it is in contact with stop 23A", causes the index wheel 16 to rotate from 1 cavity 19 to the next cavity 19 or close to it; otherwise locking of the index wheel 16 will be a problem. In order to avoid large shock loads dampers such as spring dampers, friction dampers, elastomer dampers, etc., can be used at stop 23A and a stop 23B. If desired stop 23A and a stop 23B do not have to be physical stops, but instead limit switches can be used to tell the linear actuator when to stop at stop 23A and stop23B; whether this can be accurate enough can be determined through experimentation.

The operation of a lever indexing mechanism that uses an actuator lever 21 that uses a jaw clutch 22 is as follows, if clockwise rotation is required then the following steps can be used:
a) during the initial stage, the index wheel 16 is locked and the jaw clutch 22 disengaged;
b) the linear actuator 20 rotates the actuator lever 21 to stop 23B if required;
c) the jaw clutch 22 is engaged;
d) the index wheel 16 is unlocked by pulling lock 18 out of its cavity 19 using locking-unlocking solenoid 17;
e) the linear actuator 20 rotates the actuator lever 21 towards stop 23A;
f) the pulling/releasing force on the lock 18 is stopped so that the lock 18 is pushed towards the index wheel 16;
g) once the lock 18 can slide into the next cavity 19 of the index wheel 16, it will do so and lock the index wheel 16;
h) once the actuator lever hits stop 23A, the jaw clutch 22 is disengaged.

And if counter-clockwise rotation is required then the following steps can be used:
a) during the initial stage, the index wheel 16 is locked and the jaw clutch 22 disengaged;
b) the linear actuator 20 rotates the actuator lever 21 to stop 23A if required;
c) the jaw clutch 22 is engaged;
d) the index wheel 16 is unlocked by pulling lock 18 out of its cavity 19 using locking-unlocking solenoid 17;
e) the linear actuator 20 rotates the actuator lever 21 towards stop 23B;
f) the pulling/releasing force on the lock 18 is stopped so that the lock 18 is pushed towards the index wheel 16;
g) once the lock 18 can slide into the next cavity 19 of the index wheel 16, it will do so and lock the index wheel 16;
h) once the actuator lever hits stop 23B, the jaw clutch 22 is disengaged.

For a CVT 2 it is recommended, but not an absolute requirement, that steps a) to c) are performed when the cone/transmission belt/transmission pulley of the indexing mechanism (the cone/transmission belt/transmission pulley which axial position is changed using the indexing mechanism) is used for toothed torque transmission, and steps d) to h) are performed when the cone/transmission belt/transmission pulley of the indexing mechanism is not used for toothed torque transmission.

For a CVT 2, in order to allow for proper engagement when no rotational adjustment between the transmission pulleys or cones is provided, the rotation of the index wheel 16 from one cavity 19 to the next cavity 19, should result in an axial position change of its cone/transmission belt/transmission pulley that results from an "initial transmission diameter of its cone/or the cone of its transmission belt/transmission pulley where the torque transmitting circumference of the cone corresponds to a length for which the circumferential distance between the tooth of the cone and an imaginary tooth positioned exactly opposite of the tooth of the cone is a multiple of the width of a tooth of 'its transmission belt which is positioned at said initial transmission diameter' (such as 10 teeth, 11 teeth, 12 teeth, 20 teeth, 21 teeth, etc.)" to a "final transmission diameter where the torque transmitting circumference of the cone corresponds to a length for which the circumferential distance between the tooth of the cone and an imaginary tooth positioned exactly opposite of the tooth of the cone is also a multiple of the width of a tooth of 'its transmission belt which is positioned at said final transmission diameter'".

However, this mechanism can also be used where the rotation of the index wheel 16 from one cavity 19 to the next, does not result in an axial position change of its cone/transmission belt/transmission pulley that results from an initial transmission diameter of its cone/or the cone of its transmission belt/transmission pulley where the torque transmitting circumference of the cone corresponds to a length for which the circumferential distance between the tooth of the cone and an imaginary tooth positioned exactly opposite of the tooth of the cone is a multiple of the width of a tooth of 'its transmission belt which is positioned at said initial transmission diameter" (such as 10 teeth, 11 teeth, 12 teeth, 20 teeth, 21 teeth, etc.) to a final transmission diameter where the torque transmitting circumference of the cone corresponds to a length for which the circumferential distance between the tooth of the cone and an imaginary tooth positioned exactly opposite of the tooth of the cone is also a multiple of the width of a tooth of 'its transmission belt which is positioned at said final transmission diameter'. Also, the transmission diameter of a cone depends on the axial position of a cone relative to its transmission belt, which means the same thing as the axial position of a transmission belt relative to its cone.

For a CVT 2, if rotational adjustment between the transmission pulleys or cones is provided, then the required axial position change of the cone/transmission belt/transmission pulley of the indexing mechanism as to allow for proper engagement for a given amount of rotation of the index wheel 16 from one cavity 19 to the next, depends on the rotational adjustment provided. For example, if a half-a-tooth width of rotational adjustments is provided, then the rotation of the index wheel from one cavity to the next, should result in an axial position change of its cone/transmission belt/transmission pulley that results from an "initial transmission diameter of its cone/or the cone of its transmission belt/transmission pulley where the torque transmitting circumference of the cone corresponds to a length that is a multiple of the width of a tooth of 'its transmission belt which is positioned at said initial transmission diameter' (such as 10 teeth, 11 teeth, 12 teeth, 20 teeth, 21 teeth, etc.)" to a "final transmission diameter where the torque transmitting circumference of the cone corresponds to a length that is multiple of the width of a tooth of 'its transmission belt which is positioned at said final transmission diameter".

For a cone of CVT 1, steps a) to c) can be performed at any time, and steps d) to h) should only be performed during an axial position changing interval of the cone of the indexing mechanism, which starts when only one tooth of the cone is engaged with the transmission belt and ends when the currently not engaged tooth of the cone reengages with the transmission belt. For example, here about half a rotation of the cone of the indexing mechanism can be used to perform steps a) to c) and about half a rotation of the cone of the indexing mechanism can be used to perform steps d) to h), or about "one and a half" rotation of the cone of the indexing mechanism can be used to perform steps a) to c) and about half a rotation of the cone of the indexing mechanism can be used to perform steps d) to h), etc.

For a cone of CVT 4, steps a) to c) can be performed at any time, and it is recommended that steps d) to h) are only be performed during an axial position changing interval of the cone of the indexing mechanism, which starts when the non-torque transmitting arc of the cone starts to be not completely covered by its transmission belt and ends when the non-torque transmitting arc of the cone starts to be completely covered by its transmission belt.

In general, for a cone of any CVT, it is recommended that steps a) to c) can be performed at any time; and it is recommended that steps d) to h) are only performed during an axial position changing interval of the cone of the indexing mechanism (only performed when the cone is in a moveable position). If performing steps d) to h when the "cone is not in a moveable position", such as when a complete non-torque transmitting arc of the cone of a CVT 4 is completely covered by its transmission belt for example, will not cause any damages in the CVT, such as only causes stalling of the "lever indexing mechanism" and an acceptable increase in tension in the transmission belt of the CVT for example, then steps d) to h can be performed before the "cone is in a moveable position"; but in order to always ensure proper engagement between the teeth of the cone and the teeth of its transmission belt, steps d) to h should be completed before the cone has rotated from a "cone is in a moveable position" to a "cone is not in a moveable position". Also the steps and the order of the step can be changed/modified/rearranged as needed.

For a cone of a CVT that uses a lever indexing mechanism to drive its axial position changing mechanism, in order to allow for proper engagement after an axial position change of the cone, the rotation of the index wheel 16 from one cavity 19 to the next cavity 19 should result in an axial position change of the cone that moves the cone from "one diameter that allows for proper engagement" to "another diameter that allows for proper engagement".

Experimentations can be used to determine the required axial position change of a cone in order to allow for proper engagement. For a CVT 1 and a CVT 4 details regarding the required axial position change of a cone in order to allow for proper engagement are described in the sections of this disclosure that cover these CVT's.

For "step d) the index wheel 16 is unlocked", the pulling/releasing force on the lock should be applied long enough so that the index wheel 16 will not relock at its current rotational position but fast enough so that the index wheel 16 will not skip a cavity 19. Proper duration for keeping the solenoid for locking-unlocking an index wheel active can be obtained through trial-and-error (i.e. increasing and decreasing the duration until the right duration is found) and experimentation.

For "step g) once the lock 18 can slide into the next cavity 19 of the index wheel 16, it will do so and lock the index wheel 16", the locking of the index wheel 16 can also be used to accurately position (center) the index wheel 16 if tapered teeth for the index wheel 16 and lock 18 (as shown in Fig. 13) are used, and a sufficiently strong spring for the lock 18 is used. It is recommended that the taper of the teeth is selected such that under all operating conditions of the system where it is used, no rotational force applied on its index wheel 16 can cause any lifting movements on its lock 18.

For optimal operation, it is recommended that the jaw clutch 22 can always perfectly engage when the actuator lever 21 is at stop 23A and stop 23B. Although not preferable, some play between the linear actuator 20 and the actuator lever 21 can be allowed so as to allow the jaw clutch 22 to perfectly engage at stop 23A and stop 23B, since this allows the actuator lever 21 to rotate a little due to centering of the engaging teeth of the jaw gears of the jaw clutch 22 to account for any misalignment between the teeth of the jaw gears during initial engagement. Also, it is recommended that the jaw clutch 22 is always engaged when the index wheel 16 is released so that the actuator lever 21 can control/maintain the rotational position of the index wheel 16 so as to prevent free rotation of the index wheel 16.

An index wheel 16 does not have to be rotated by the actuator lever 21 directly. It is also possible to have an index wheel 16 rotated by an actuator lever indirectly through the use of means for conveying rotational energy, such as gears, pulleys, belts, sprockets, chains, etc. for example. For example, an index wheel 16 can be rotated by an actuator gear that is engaged and disengaged with said index wheel 16 through a clutch, such as jaw clutch for example, in the same way the actuator lever 21 is engaged and disengaged with its index wheel 16 through a clutch. The rotation provided by the actuator gear to its index wheel 16 should be identical to the rotation provided by the actuator lever 21 to its index wheel 16 as described in earlier paragraphs; while here, the rotation of the actuator lever that is rotating the actuator gear can be different from the rotation of the actuator lever 21 described in earlier paragraphs; since here the rotation of the actuator gear also depends on the means for conveying rotational energy that is/are used to couple the actuator gear to its actuator lever.

Rotating an index wheel using a means for conveying rotational energy (gear, pulley, sprocket, etc.) that is coupled to an actuator lever mechanism (which includes the actuator lever, the tension spring(s) if used, the linear actuator, etc.), can be used as cost cutting method, since with "selecting clutches" that can selectively couple the output of an actuator lever mechanism to two or index wheels, one actuator lever mechanism can be used to rotate two or more index wheels.

The rotations of an index wheel 16 of a lever indexing mechanism can be used to rotate the gear of a gear-gear rack drive that is used to change the axial position of a part such as a cone for example. Or the rotations of an index wheel 16 of a lever indexing mechanism can be used to a drive a "driving only worm gear" that rotates a gear of a gear-gear rack drive that is used to change the axial position of a part such as a cone for example. If the index wheel 16 drives a "driving only worm gear" (so that the gear of a gear-gear rack drive used with the index wheel cannot rotate the index wheel), then the "lever indexing mechanism" can work without the index wheel locking-unlocking mechanism (lock 18 and locking-unlocking solenoid 17) and the cavities 19 of the index wheel, and hence they might be eliminated.

Also in order to damp and assist the force on the actuator lever 21, a spring or springs can be used. A set-up where this is used is shown in Fig. 14. In Fig. 14, two tension springs (labeled as tension spring 24A and tension spring 24B) pull the actuator lever 21 towards the mid-point between stop 24A and stop 24B. Here when the actuator lever 21 is at stop 23A or at stop 23B, a tension spring will provide assistance in pulling the actuator lever 21 towards the mid-point between stop A and stop B. And once the actuator lever 21 has moved past the mid-point between stop 23A and stop 23B, a tension spring will provide resistance to slow the actuator lever 21 down, so as to reduce the shock loads when the actuator lever 21 hits stop 23A or stop 23B.

### Lever Indexing Mechanism 2 (Fig. 15)

A "lever indexing mechanism 2" is basically the same as a "lever indexing mechanism" that uses tension springs (see Fig. 14) except that for a "lever indexing mechanism 2", the movement of the actuator lever 21 to rotate the index wheel 16 is from a stop 23C or a stop 23D to the neutral position, instead from stop 23A to stop 23B or from stop 23B to stop 23A as it is for a "lever indexing mechanism" that uses tension springs.

A lever indexing mechanism, which is shown in Fig. 15, has an index wheel 16 that can be locked and unlocked by a locking-unlocking solenoid 17. Here activating the locking-unlocking solenoid 17 will pull a lock 18 out of its cavity 19 and towards the locking-unlocking solenoid 17 so as to release the index wheel 16. Other mechanisms for locking-unlocking an index wheel can also be used, such as linear actuators, ratcheting mechanisms (if the index wheel is only released in one rotational direction), etc.

Here in order to rotate the index wheel 16, a linear actuator is used 20. In order to transfer the force of a linear actuator 20 to the index wheel 16 an actuator lever 21 is used. Actuator lever 21 has a clutch that can be used by a controller/controlling computer to controllably engage and disengage actuator lever 21 with index wheel 16. When the clutch is engaged, rotation from the actuator lever 21 is transferred to index wheel 16; and when the clutch is disengaged, actuator lever 21 is allowed to rotate relative to index wheel 16.

The recommended clutch to be used for the actuator lever 21 is a jaw clutch 22, although other clutches that can be controllably engaged and disengaged by the controller/controlling computer can also be used. A jaw clutch 22 can comprise of two jaw gears, one fixed for rotation relative to the index wheel 16 and the other fixed for rotation relative to the actuator lever 21, that can be pushed together so as to have the clutch engaged and pushed apart so as to have the clutch disengaged. A jaw gear can be shaped like a flat washer that has at least one flat surface that is toothed. The toothed surfaces of the jaw gear of the index wheel 16 and the jaw gear of the actuator lever 21 face each other and can be made to engage and disengage through the use of a solenoid and a spring or other actuators. Here when engaged, no significant relative rotational movements between the jaw gears should occur.

The linear actuator 20 is connected to the actuator lever 21 so that it can turn the actuator lever 21 clockwise and counter-clockwise. Any type of linear actuator, such as pneumatic, hydraulic, or solenoids can be used as the linear actuator 20. If solenoids are used, then the linear actuator probably consists of two solenoids that can pull in opposite directions, unless a solenoid that can push and pull is used.

If desired, the actuator lever 21 can also be rotated using a rotary actuator, or other means for rotating a lever. If desired, the actuator lever 21 can also be driven by the system. For example, for a CVT, the actuator lever can be driven by rotation of the input shaft/spline or output shaft/spline of the CVT. Here the rotating motion of the shaft/spline of the CVT can be converted into reciprocating motion using a mechanism (many well know mechanisms that an accomplish this are known), this reciprocating motion can then be used to rotate the actuator lever clockwise and counter-clockwise as required. Here the timing of the clutch has to be accurate.

In order to avoid large shock loads, the force of the linear actuator or rotary actuator used to rotate the actuator lever 21 can be reduced when it is about to hit a stop or when it has traveled a set amount of distance. Here if pneumatics or hydraulics is used as the linear actuator 20, then a pressure relief can be used for such purpose.

In order to provide the required amount of rotation, the clockwise and counter-clockwise rotations of the actuator lever 21 are limited by a stop 23C and a stop 23D, which are fixed relative to the frame of the lever indexing mechanism 2 and not the index wheel 16. Here rotating the actuator lever 21 from a position where it is in contact with stop 23C to the neutral position, which is the mid-point position between stop 23C and stop 23D, causes the index wheel 16 to rotate from one cavity 19 to the next cavity 19 (cause the index wheel 16 to rotate a one cavity step rotation which is a rotation that rotates a cavity 19 adjacent to the cavity 19 under the lock 18 to the cavity 19 under the lock 18 position); and here rotating the actuator lever 21 from a position where it is in contact with stop 23D to the neutral position also causes the index wheel 16 to rotate from one cavity 19 to the next cavity 19. In order to avoid large shock loads dampers such as spring dampers, friction dampers, elastomeric dampers, etc., can be used at stop 23C and a stop 23D. If desired stop 23C and a stop 23D do not have to be physical stops, but instead limit switches can be used to tell the linear actuator 20 when to stop at stop 23C and stop 23D; whether this can be accurate enough can be determined through experimentation.

In order to rotate the actuator lever 21 from stop 23C or stop 23D to the neutral position, two tension springs (labeled as tension spring 24C and tension spring 24D in Fig. 15) that pull the actuator lever 21 towards the neutral position are used. When the actuator lever 21 is at the neutral position, the pulling force of the tension springs are equal and cancel each other out, or they are zero. Here when the actuator lever is at stop 23C or at stop 23D, a tension spring (tension spring 24C or tension spring 24D) will pull the actuator lever 21 towards the neutral position. And when the linear actuator 20 moves the actuator lever 21 towards stop 23C or stop 23D, a tension spring will slow the actuator lever 21 down, so as to reduce the shock load when the actuator lever 21 hits stop 24C or stop 24D.

It is recommended that when at the neutral position, the tension springs are under tension so that they have enough pulling force to overcome the "forces needed to move the item that uses the lever indexing mechanism 2 for movement" when moving the actuator lever 21 to the neutral position or sufficiently close to the neutral position (locking of the index wheel 16 can also provide some rotational movements); although, momentum can also be used to move the actuator lever 21 to the neutral position or sufficiently close to the neutral position if the pulling force of a tension spring alone is not large enough to pull the actuator lever 21 to the neutral position or sufficiently close to the neutral position when its needs to overcome the "forces needed to move the item that uses the lever indexing mechanism 2 for movement".

Also each tension spring can be replaced with multiple tension springs if desired. The tension springs (extension springs) can also be replaced or supplemented by other springs, such as compression springs, torsion springs, etc. If size is an issue, the tension springs can be positioned lengthwise relative to their CVT; and bevel gears, shafts, etc., can be used to transfer the rotation of the index wheel 16 to the required location at the required orientation.

The operation of a "lever indexing mechanism 2" that uses an actuator lever 21 that uses a jaw clutch 22 for a CVT 2 is as follows, if clockwise rotation is required then the following steps can be used:
a) during the initial stage, the index wheel 16 is locked and the jaw clutch 22 disengaged;
b) the linear actuator 20 rotates the actuator lever 21 to stop 23D if required;
c) the jaw clutch 22 is engaged;
d) the index wheel 16 is unlocked;
e) all forces of the linear actuator 20 are released so that the linear actuator 20 will not prevent tension spring 24C from rotating the actuator lever 21 to the neutral position. If pneumatics (preferred) or hydraulics are used for the linear actuator 20, then a vent valve that vents all the pressure in the pressurized chamber of linear actuator 20 can be used. If solenoids are used, then the solenoids can simply be deactivated.
f) the pulling/releasing force on the lock 18 is stopped so that the lock 18 is pushed towards the index wheel 16;
g) once the lock 18 can slide into the next cavity 19 of the index wheel 16, it will do so and lock the index wheel 16;
h) once the index wheel 16 is locked or once the lock 18 has started to slide into the next cavity 19 of the index wheel 16, the jaw clutch 22 is disengaged.

And if counter-clockwise rotation is required then the following steps can be used:
a) during the initial stage, the index wheel 16 is locked and the jaw clutch 22 disengaged;
b) the linear actuator 20 rotates the actuator lever 21 to stop 23C if required;
c) the jaw clutch 22 is engaged;
d) the index wheel 16 is unlocked;
e) all forces of the linear actuator 20 are released so that the linear actuator 20 will not prevent tension spring 24D from rotating the actuator lever 21 to the neutral position. If pneumatics (preferred) or hydraulics are used for the linear actuator 20, then a vent valve that vents all the pressure in the pressurized chamber of linear actuator 20 can be used. If solenoids are used, then the solenoids can simply be deactivated.
f) the pulling/releasing force on the lock 18 is stopped so that the lock 18 is pushed towards the index wheel 16;
g) once the lock 18 can slide into the next cavity 19 of the index wheel 16, it will do so and lock the index wheel 16;
h) once the index wheel 16 is locked or once the lock 18 has started to slide into the next cavity 19 of the index wheel 16, the jaw clutch 22 is disengaged.

For a CVT 2 it is recommended, but not an absolute requirement, that steps a) to c) are performed when the cone/transmission belt/transmission pulley of the "indexing mechanism 2" (the cone/transmission belt/transmission pulley which axial position is changed using the "indexing mechanism 2") is used for toothed torque transmission, and steps d) to h) are performed when the cone/transmission belt/transmission pulley of the indexing mechanism 2 is not used for toothed torque transmission.

For a CVT 2, in order to allow for proper engagement when no rotational adjustment between the transmission pulleys or cones is provided, the rotation of the index wheel 16 from one cavity 19 to the next cavity 19, should result in an axial position change of its cone/transmission belt/transmission pulley that results from an "initial transmission diameter of its cone/or the cone of its transmission belt/transmission pulley where the torque transmitting circumference of the cone corresponds to a length for which the circumferential distance between the tooth of the cone and an imaginary tooth positioned exactly opposite of the tooth of the cone is a multiple of the width of a tooth of 'its transmission belt which is positioned at said initial transmission diameter' (such as 10 teeth, 11 teeth, 12 teeth, 20 teeth, 21 teeth, etc.)" to a "final transmission diameter where the torque transmitting circumference of the cone corresponds to a length for which the circumferential distance between the tooth of the cone and an imaginary tooth positioned exactly opposite of the tooth of the cone is also a multiple of the width of a tooth of 'its transmission belt which is positioned at said final transmission diameter'".

However, this mechanism can also be used where the rotation of the index wheel 16 from one cavity 19 to the next, does not result in an axial position change of its cone/transmission belt/transmission pulley that results from an initial transmission diameter of its cone/or the cone of its transmission belt/transmission pulley where the torque transmitting circumference of the cone corresponds to a length for which the circumferential distance between the tooth of the cone and an imaginary tooth positioned exactly opposite of the tooth of the cone is a multiple of the width of a tooth of 'its transmission belt which is positioned at said initial transmission diameter" (such as 10 teeth, 11 teeth, 12 teeth, 20 teeth, 21 teeth, etc.) to a final transmission diameter where the torque transmitting circumference of the cone corresponds to a length for which the circumferential distance between the tooth of the cone and an imaginary tooth positioned exactly opposite of the tooth of the cone is also a multiple of the width of a tooth of 'its transmission belt which is positioned at said final transmission diameter'. Also, the transmission diameter of a cone depends on the axial position of a cone relative to its transmission belt, which means the same thing as the axial position of a transmission belt relative to its cone.

For a CVT 2, if rotational adjustment between the transmission pulleys or cones is provided, then the required axial position change of the cone/transmission belt/transmission pulley of the indexing mechanism as to allow for proper engagement for a given amount of rotation of the index wheel 16 from one cavity 19 to the next, depends on the rotational adjustment provided. For example, if a half-a-tooth width of rotational adjustments is provided, then the rotation of the index wheel from one cavity to the next, should result in an axial position change of its cone/transmission belt/transmission pulley that results from an "initial transmission diameter of its cone/or the cone of its transmission belt/transmission pulley where the torque transmitting circumference of the cone corresponds to a length that is a multiple of the width of a tooth of 'its transmission belt which is positioned at said initial transmission diameter' (such as 10 teeth, 11 teeth, 12 teeth, 20 teeth, 21 teeth, etc.)" to a "final transmission diameter where the torque transmitting circumference of the cone corresponds to a length that is multiple of the width of a tooth of 'its transmission belt which is positioned at said final transmission diameter".

For a cone of CVT 1, steps a) to c) can be performed at any time, and steps d) to h) should only be performed during an axial position changing interval of the cone of the indexing mechanism, which starts when only one tooth of the cone is engaged with the transmission belt and ends when the currently not engaged tooth of the cone reengages with the transmission belt. For example, here about half a rotation of the cone of the indexing mechanism can be used to perform steps a) to c) and about half a rotation of the cone of the indexing mechanism can be used to perform steps d) to h), or about "one and a half" rotation of the cone of the indexing mechanism can be used to perform steps a) to c) and about half a rotation of the cone of the indexing mechanism can be used to perform steps d) to h), etc.

For a cone of CVT 4, steps a) to c) can be performed at any time, and it is recommended that steps d) to h) are only be performed during an axial position changing interval of the cone of the indexing mechanism, which starts when the non-torque transmitting arc of the cone starts to be not completely covered by its transmission belt and ends when the non-torque transmitting arc of the cone starts to be completely covered by its transmission belt.

In general, for a cone of any CVT, it is recommended that steps a) to c) can be performed at any time; and it is recommended that steps d) to h) are only performed during an axial position changing interval of the cone of the indexing mechanism (only performed when the cone is in a moveable position). If performing steps d) to h when the "cone is not in a moveable position", such as when a complete non-torque transmitting arc of the cone of a CVT 4 is completely covered by its transmission belt for example, will not cause any damages in the CVT, such as only causes stalling of the "lever indexing mechanism 2" and an acceptable increase in tension in the transmission belt of the CVT for example, then steps d) to h can be performed before the "cone is in a moveable position"; but in order to always ensure proper engagement between the teeth of the cone and the teeth of its transmission belt, steps d) to h should be completed before the cone has rotated from a "cone is in a moveable position" to a "cone is not in a moveable position".

For a cone of a CVT that uses a lever indexing mechanism to drive its axial position changing mechanism, in order to allow for proper engagement after an axial position change of the cone, the rotation of the index wheel 16 from one cavity 19 to the next cavity 19 should result in an axial position change of the cone that moves the cone from "one diameter that allows for proper engagement" to "another diameter that allows for proper engagement".

Experimentations can be used to determine the required axial position change of a cone in order to allow for proper engagement. For a CVT 1 and a CVT 4 details regarding the required axial position change of a cone in order to allow for proper engagement are described in the sections of this disclosure that cover these CVT's.

For "step d) the index wheel 16 is unlocked", the pulling/releasing force on the lock should be applied long enough so that the index wheel 16 will not relock at its current rotational position but fast enough so that the index wheel 16 will not skip a cavity 19. Proper duration for keeping the solenoid for locking-unlocking an index wheel active can be obtained through trial-and-error (i.e. increasing and decreasing the duration until the right duration is found) and experimentation.

For "step g) once the lock 18 can slide into the next cavity 19 of the index wheel 16, it will do so and lock the index wheel 16", the locking of the index wheel 16 can also be used to accurately position (center) the index wheel 16 if tapered teeth for the index wheel 16 and lock 18 (as shown in Fig. 13) are used, and a sufficiently strong spring for the lock 18 is used. It is recommended that the taper of the teeth is selected such that under all operating conditions of the system where it is used, no rotational force applied on its index wheel 16 can cause any lifting movements on its lock 18.

For optimal operation, it is recommended that the jaw clutch 22 can always perfectly engage when the actuator lever 21 is at stop 23A and stop 23B. Although not preferable, some play between the linear actuator 20 and the actuator lever 21 can be allowed so as to allow the jaw clutch 22 to perfectly engage at stop 23A and stop 23B, since this allows the actuator lever 21 to rotate a little due to centering of the engaging teeth of the jaw gears of the jaw clutch 22 to account for any misalignment between the teeth of the jaw gears during initial engagement. Also, it is recommended that the jaw clutch 22 is always engaged when the index wheel 16 is released so that the actuator lever 21 can control/maintain the rotational position of the index wheel 16 so as to prevent free rotation of the index wheel 16.

For "step e) all forces of the linear actuator 20 are released so that the linear actuator 20 will not prevent a tension spring from rotating the actuator lever 21 to the neutral position"; if desired during "step e)", or after "step c) the jaw clutch 22 is engaged", the linear actuator can be made to start applying a force in the direction of the pulling force of the tension spring under tension. The said force of the linear actuator should be stopped once or before the actuator lever reaches the neutral position. Here a limit switch can be used to have the controller/controlling computer know when to stop the said force of the linear actuator. The said force of the linear actuator can be used to assist the pulling force of the tension spring under tension.

In order to reduce shock loads due to the locking of the index wheel 16, when the index wheel 16 is unlocked (performed at "step d)"), it can be left unlocked for a maximum allowable duration, which can be determined through experimentation or engineering, so that the actuator lever 21 can become more stabilized at the neutral position before the index wheel 16 is locked. If the index wheel 16 is left unlocked for a maximum allowable duration, then "steps f) the pulling/releasing force on the lock 18 is stopped so that the lock 18 is pushed towards the index wheel 16" and "step g) once the lock 18 can slide into the next cavity 19 of the index wheel 16, it will do so and lock the index wheel 16" are not used in the operation of the "lever indexing mechanism 2".

Another method to reduce shock loads due to locking of the index wheel 16 is by using a pneumatic/hydraulic linear actuator 20 as an air cushion. Here when the actuator lever 21 is about to reach the neutral position, the vent of the linear actuator 20 can be reduced (i.e. a vent valve with multiple settings or multiple vent valves can be used). Wedging brakes near the neutral position, and many other methods can also be used.

If the forces of the opposite tension springs (tension spring 24C and tension spring 24D) are zero or near zero at the neutral position, then the stiffness of the opposite tension springs do not have to be equal. It is even possible to use only one tension spring (such as only tension spring 24C or only tension spring 24D), which can act as only a tension spring or both as a tension spring and as a compression spring. This can be useful as a cost cutting method, since the pulling/stiffness requirements of tension spring 24C and tension spring 24D might not be equal. For example, if used to move a cone, one tension spring is used to move a cone in the axial direction where it needs to overcome the axial force due to the tension of the transmission belt, while the other tension spring (if used) is used to move a cone in the axial direction where it is assisted by the tension of the transmission belt in moving said cone in the axial direction.

Also if desired no spring is needed to rotate the actuator lever 21 to the neutral position since the linear actuator 20 can be used to rotate the actuator lever 21 to the neutral position. Here limit switches or neutral position stops can be used to stop the actuator lever at the neutral position.

An index wheel 16 does not have to be rotated by the actuator lever 21 directly. It is also possible to have an index wheel 16 rotated by an actuator lever indirectly through the use of means for conveying rotational energy, such as gears, pulleys, belts, sprockets, chains, etc. for example. For example, an index wheel 16 can be rotated by an actuator gear that is engaged and disengaged with said index wheel 16 through a clutch, such as jaw clutch for example, in the same way the actuator lever 21 is engaged and disengaged with its index wheel 16 through a clutch. The rotation provided by the actuator gear to its index wheel 16 should be identical to the rotation provided by the actuator lever 21 to its index wheel 16 as described in earlier paragraphs; while here, the rotation of the actuator lever that is rotating the actuator gear can be different from the rotation of the actuator lever 21 described in earlier paragraphs; since here the rotation of the actuator gear also depends on the means for conveying rotational energy that is/are used to couple the actuator gear to its actuator lever.

Rotating an index wheel using a means for conveying rotational energy (gear, pulley, sprocket, etc.) that is coupled to an actuator lever mechanism (which includes the actuator lever, the tension spring(s) if used, the linear actuator, etc.), can be used as cost cutting method, since with "selecting clutches" that can selectively couple the output of an actuator lever mechanism to two or index wheels, one actuator lever mechanism can be used to rotate two or more index wheels.

The rotations of an index wheel 16 of a lever indexing mechanism can be used to rotate the gear of a gear-gear rack drive that is used to change the axial position of a part such as a cone for example. Or the rotations of an index wheel 16 of a lever indexing mechanism can be used to a drive a "driving only worm gear" that rotates a gear of a gear-gear rack drive that is used to change the axial position of a part such as a cone for example. If the index wheel 16 drives a "driving only worm gear" (so that the gear of a gear-gear rack drive used with the index wheel cannot rotate the index wheel), then the "lever indexing mechanism 2" can work without the index wheel locking-unlocking mechanism (lock 18 and locking-unlocking solenoid 17) and the cavities 19 of the index wheel, and hence they might be eliminated.

### System Driven Indexing Mechanism (Fig. 16)

Another mechanism that can be used to change the linear position of an item quickly and accurately is a "system driven indexing mechanism". For a "system driven indexing mechanism", the rotation of an index wheel is driven by the rotation of the system. For example, if a "system driven indexing mechanism" is used for a CVT 2, then its index wheel can be driven by the rotation of the shaft/spline of the cones (single tooth cones), although here the speed of the index wheel and the speed of the shaft/spline of the cones can be different due to the speed reduction or speed increase of the means for coupling (such as gears, sprocket, chains, belts, pulleys, etc.).

An example of a "system driven indexing mechanism" for a CVT is shown in Fig. 16, for this system wheel 25A and wheel 25B are driven by the rotation of the input shaft/spline of the CVT, obviously they can also be rotated by the output or other shafts/splines of the CVT. Here wheel 25A and wheel 25B are coupled to the input shaft/spline in manner such that wheel 25A rotates clockwise with the rotation of the input shaft/spline, and wheel 25B rotates counter-clockwise with the rotation of the input shaft/spline; and so that when engaged with their index wheel 16, wheel 25A and wheel 25B can provide sufficient rotation for the index wheel 16 for a given amount of rotation of to the input shaft/spline as required.

Wheel 25A is engaged with the index wheel 16 through the engagement of a gear 26A with index wheel gear 28 (gear 26A is engaged and disengaged for rotation with wheel 25A through clutch 27A, and index wheel gear 28 is fixed for rotation relative to index wheel 16). And wheel 25B is engaged with the index wheel 16 through the engagement of a gear 26B with index wheel gear 28 (gear 26B is engaged and disengaged for rotation with wheel 25B through clutch 27B, and index wheel gear 28 is fixed for rotation relative to index wheel 16).

The rotations of wheel 25A is only needed when the index wheel 16 needs to rotate counter-clockwise and the rotations of wheel 25B is only needed when the index wheel 16 needs to rotate clockwise. In order to select-ably apply the rotations of wheel 25A to the index wheel 16, a clutch 27A that can engage or disengage wheel 25A with a gear 26A through the use of a controller/controlling computer is used. And in order to select-ably apply the rotations of wheel 25B to the index wheel 16, a clutch 27B that can engage or disengage wheel 25B with a gear 26B through the use of a controller/controlling computer is used. Here when engaged, the rotations of wheel 25A is transferred to the index wheel 16 through the engagement of gear 26A with the index wheel gear 16; and when engaged, the rotations of wheel 25B is transferred to the index wheel 16 through the engagement of gear 26B with the index wheel gear 28.

In order for the controller/controlling computer to know when locking of a released index wheel 16 has started, a locking sensor 29 that senses when locking of a released index wheel 16 is about to take place is used. The locking sensor 29 can be used to signal when to deactivate any rotational position adjusting force applied to index wheel 16. A locking sensor 29 can consist of a sensor that senses any vertical movement lock 18 after its locking-unlocking solenoid 17 has been deactivated.

If counter-clockwise rotation is required then the following steps can be used:
a) during the initial stage, the index wheel 16 is locked;
b) the index wheel 16 is unlocked;
c) clutch 27A is engaged so that gear 26A rotates index wheel gear 28;
f) the pulling/releasing force on the lock 18 is stopped so that the lock 18 is pushed towards the index wheel 16;
g) once the lock 18 can slide into the next cavity of the index wheel 16, it will do so and lock the index wheel 16;
h) once locking of index wheel 16 has started (as sensed by locking sensor 29), clutch 27A is disengaged.

And if clockwise rotation is required then the following steps can be used:
a) during the initial stage, the index wheel 16 is locked;
b) the index wheel 16 is unlocked;
c) clutch 27B is engaged so that gear 26B rotates index wheel gear 28;
f) the pulling/releasing force on the lock 18 is stopped so that the lock 18 is pushed towards the index wheel 16;
g) once the lock 18 can slide into the next cavity of the index wheel 16, it will do so and lock the index wheel 16;
h) once locking of index wheel has started (as sensed by locking sensor 29), clutch 27B is disengaged

For step f), the index wheel should be released long enough so that it will not relock at its current rotational position but fast enough so that it will not skip a groove. Proper duration for keeping an index wheel unlocked can be obtained through trial and error and experimentation.

The steps for operating the "system driven indexing mechanism" can be changed and rearranged. For example, step "c) clutch 27A/B is engaged so that gear 26A/B rotates index wheel gear 28" can be performed before step "b) the index wheel 16 is unlocked"; however here the wheel 25A/B has to be able to rotate relative to the input shaft/spline of the CVT that is driving it, this can be achieved through the use of friction clutch(s) or other devices that allow for relative rotation.

If wheel 25A or wheel 25B can be made to select-ably rotate clockwise and counter-clockwise (many well know mechanisms that an accomplish this are known) only either wheel 25A or wheel 25B is needed.

A "system driven indexing mechanism" can be combined with other indexing mechanism or other mechanisms in a manner so that only one wheel 25 (and its clutch and gear) that is providing rotation in only one direction is required, if the other indexing mechanism is used to provide rotation in the other direction.

The rotations of an index wheel 16 of a "system driven indexing mechanism" can be used to rotate the gear of a gear-gear rack drive that is used to change the axial position of a part such as a cone for example.

All items/descriptions of the other indexing mechanism of this disclosure are also relevant here as applicable and vice-versa.

### Other Methods and Devices Related to Changing the Transmission Ratio

### Mover Sliding Plate Mechanism for Converting Fixed Interval Movements to Required Interval Movement for Moving a Cone

The axial position of a cone can be changed quickly and accurately using a "transmission ratio changing mechanism" described in the "Transmission Ratio Changing Mechanisms" section, preferably a "Lever Indexing Mechanism 2".

The movements provided by a "transmission ratio changing mechanism" is fixed, while the required axial movements for a cone/transmission belt/transmission pulley from one transmission diameter that allows for proper engagement to the next transmission diameter that allows for proper engagement might change with the change in transmission diameter of its cone (this is the case for single tooth cone and cone with two opposite teeth due to the location of the neutral-axis of their transmission belt). If so, in order to have a "transmission ratio changing mechanism" provide the required amount of axial movements for a cone/transmission belt/transmission pulley a "mover sliding plate mechanism", described in this section can be used.

A "mover sliding plate mechanism" that can be used to control the axial position of a cone/transmission belt/transmission pulley is shown as a partial side-view in Figs. 17A and 17B, as a partial end-view in Fig. 18, and as a partial top-view in Fig. 19. It comprises of two parallel sliding plates 30 that can be moved in the up-&-down directions shown in Fig. 17A. The position of one sliding plate relative to the other is fixed through the use of a connector plate 31 so that the sliding plates 30 are always aligned such that the mover pins 32, which end portions slide in slot 30-S1 of a sliding plate 30, are always perpendicular to the sliding plates 30.

In Figs. 17A, 17B, and 18, the connector plate 31 is welded to the sliding plates 30 for simplicity in describing the mechanism. Obviously here and in all other parts of this description where applicable, other methods for connecting can be used. For example, here fasteners such as bolts, nuts, locking rings, etc., can be used for ease of assembly and disassembly and to prevent warping.

A mover pin 32 is attached to each side surface a mover rod 33 near the rear end of the mover rod 33, which is shown in Figs. 21, 22, and 23. And at the front end of the mover rod 33, a mover connector 34 is attached. A mover connector 34 has a hole through which the front end of cone 35 (sliding on a spline 41) can be slid in and secured for axial (but not rotational) movements relative to the mover connector 34 using a cone lock ring 36. A mover rod 33 and its attachments are shown as a side-view in Fig. 21, as a top-view in Fig. 22, and as a front-view in Fig. 23. If used to move other things than a cone, such as a guide plate for a transmission belt or a transmission pulley for example, a different mover connector 34 can be used for the mover rod 33.

The slots 30-S1 of the sliding plates 30 are shaped so that with proper fixed interval up-&-down movements of the sliding plates 30, a mover rod 33 can properly position the cone/transmission belt/transmission pulley attached to it so that said cone/transmission belt/transmission pulley is properly positioned as to allow for proper engagement for all transmission diameters of its cone.

Figs. 17A and 17B might not accurately show the slots 30-S1 of the sliding plates 30. The exact shape for the slots 30-S1 of the sliding plates 30 can be obtained through experimentation. For example, for a cone with two opposite teeth, an experiment can be made by moving the axial position of the cone relative to its transmission belt from its smallest transmission diameter to its largest transmission diameter and recording for what axial positions of the cone relative to its transmission belt, the transmission belt can be wrapped around the cone from one tooth of the cone to the other tooth of the cone without stretching. The obtained axial positions, which should be used as the axial positions used for the operational transmission diameters of the cone, in addition with the fixed interval up-&-down movements provided by the "transmission ratio changing mechanism" can be used to accurately shape the slots 30-S1 of the sliding plates 30 through simple mathematics and/or experimentation.

In order to limit the movements of the mover pin 32, and hence also the movements of the mover rod 33, to horizontal movements, two parallel horizontal movement plates 37 that each has a horizontal slot are used. The horizontal movement plates 37 are aligned and fixed to a non-moving part of the CVT, such as the housing of the CVT for example, in manner such that the mover pins 32, which end portions each slide in the slot of a horizontal movement plate 37, are always horizontal.

Between the parallel sliding plates 30 and the parallel horizontal movement plates 37, the mover rod 33 is positioned (see Figs. 18 and 19). In order for the "mover sliding plate mechanism" to be accurate, it is recommended that minimal axial movements between the mover rod 33 and the sliding plates 30 are allowed.

In order to secure the mover rod 33 to the sliding plates 30 and the horizontal movement plates 37, two locking rings 38 that sandwich the sliding plates 30 are used; here each locking ring 38 is attached near an end of a mover pin 32 of the mover rod 33. It is recommended that friction between the slots of "the sliding plates 30 and the horizontal movement plates 37" and the "mover pins 32" is minimized; and it is also recommended that friction between the "locking rings 38" and the "sliding plates 30" is minimized; this can be achieved by making or coating the sliding plates 30 and the horizontal movement plates 37 with a low friction material, or submerging the mechanism in oil. Also in the figures the locking ring grooves for the locking rings might not be shown because of time limitations, but obviously they are there. This also applies to the all other parts of this disclosure where applicable.

In order to move the sliding plates 30 in the up & down directions shown in Fig. 17A, a linear actuator which linear movements are controlled through rotational input, such as a gear-gear rack drive or rotating screw-carriage drive, can be used. Here the rotational input for the linear actuator can be provided by a "transmission ratio changing mechanism" described in the "Transmission Ratio Changing Mechanisms" section, preferably a "Lever Indexing Mechanism 2". Obviously other types of linear actuators can also be used.

In Figs. 17A & 19, gear-gear rack drive that has a gear 39 and a gear rack 40 (which is fixed to a sliding plate 30) are used to move the sliding plates 30 in the up & down directions shown in Fig. 17A. A transmission ratio changing mechanism described in the "Transmission Ratio Changing Mechanisms" section, preferably a "Lever Indexing Mechanism 2", can be used to provide the rotational input for the gear 39. The rotational input for the gear 39 can also be provided by other means such as a stepper motor for example.

Each sliding plate 30 has two parallel vertical guides 42 (see Fig. 17B & 19), that sandwich the side surfaces of the sliding plate 30. The vertical guides 42 are used to constrain the movements of the sliding plates 30 to the up & down directions. It is preferably to keep friction between the side surfaces of the sliding plates 30 and the constraining surfaces of the vertical guides 42 to a minimum.

The "mover sliding plate mechanism" can also be used to move a transmission pulley, transmission a belt, a guide plate of a transmission belt, a sliding plate mechanism for a compensating pulley, a compensating pulley, an engagement pulley, etc. axially. Slight adaptations might be necessary.

The "mover sliding plate mechanism" in combination with a "transmission ratio changing mechanism", such as a "lever indexing mechanism 2", can also be used to move a other things that need to be moved a certain amount within a short duration. Here the slots 30-S1 of the sliding plates 30 can simply be reshaped as needed.

### Straight Rotation to Linear Converting Mover Mechanism

For CVT's where fixed interval axial movements can allow for proper engagement (such as a CVT 1 using cones with two opposite torque transmitting members each, a CVT 1 using cones with one torque transmitting member each, and a CVT 4 using cones with one torque transmitting member each for example), a "mover sliding plate mechanism" might not be needed.

Here in order to move a cone/transmission belt/transmission pulley, a "straight rotation to linear converting mover mechanism", shown as a partial side-view in Fig. 23 and as a top-view in Fig. 24, can be used. A "straight rotation to linear converting mover mechanism" uses a mover rod 33 described previously to which a gear rack 40 is attached.

The mover rod 33 to which a gear rack 40 is attached is shown as a side-view in Fig. 25 and as a top-view in Fig. 26. It is identical to the mover rod 33 shown in Figs. 20 to 22, except that a gear rack 40 is attached to it.

For the "straight rotation to linear converting mover mechanism" shown in Figs. 23 and 24, mover rod 33 is used to move a cone with one torque transmitting member 43; and gear rack 40 is moved in a linear movement through the engagement with a rotating only gear 39.

A transmission ratio changing mechanism described in the "Transmission Ratio Changing Mechanisms" section, preferably a "Lever Indexing Mechanism 2", can be used to provide the rotational input for the gear 39. The rotational input for the gear 39 can also be provided by other means such as a stepper motor for example.

The "straight rotation to linear converting mover mechanism" can also be used to move a transmission pulley, transmission a belt, a guide plate of a transmission belt, a sliding plate mechanism for a compensating pulley, a compensating pulley, an engagement pulley, etc. axially. Slight adaptations might be necessary.

### Method for Increasing Duration Through Independent Axial Position Change

A CVT 1, which is shown in Figs. 1 to 4, comprises of a cone with two opposite teeth, labeled as cone with two opposite teeth 1A, mounted on one shaft/spline that is coupled to another cone with two opposite teeth, labeled as cone with two opposite teeth 1B, mounted on another shaft/spline by a transmission belt 2. If desired, a CVT 1 can also be constructed using two "cone with two opposite torque transmitting members" instead of two "cone with two opposite teeth".

The transmission ratio of a CVT 1 can be changed by changing the axial position of the cones relative to the transmission belt. This can be achieved by changing the axial position of the cones and holding fixed the axial position of the transmission belt; and by changing the axial position of the transmission belt and holding fixed the axial position of the cones.

It is recommended that the transmission ratio of a CVT 1 is only changed when both cones of the CVT are in a moveable position. A cone is in a moveable position when it is in a rotational position where changing its axial position relative to its transmission belt is preferred. And a cone is not in a moveable position when it is in a rotational position where changing its axial position relative to its transmission belt is not preferred. During the rotation of a cone, it rotates in and out of a moveable position.

For the CVT 1 shown in Figs. 1 to 4, a moveable position of a cone is a rotational position where only one tooth of that cone is engaged with its transmission belt for torque transmission. Changing the transmission ratio when a cone is not in a moveable position, which is when both teeth of a cone are engaged with their transmission belt, will stretch the transmission belt 2, which is undesirable.

Changing the transmission ratio of a CVT 1 when both cones are in a moveable position makes the duration at which the transmission ratio can be changed very short and unpredictable, since the rotational position of the cones are independent of each other because they can rotate at different speeds. Here for example one cone can be in a moveable position while the other cone isn't, or one cone can be in a position where it has almost rotated out of a moveable position while the other cone has just started to rotate into a moveable position.

It is desirable to increase the duration at which the transmission ratio can be changed under preferably conditions. Since this reduces the speed at which the transmission ratio has to be changed, increases the maximum allowable speed of the cones at which the transmission ratio can be changed, and reduces the shock loads during transmission ratio change. The method of this section will significantly increase the duration at which the transmission ratio can be changed and makes the duration at which the transmission ratio of can be changed predictable for a CVT 1 and other CVT's for which the method of this section can be used.

In this section we describe a method for increasing the duration the transmission ratio of a CVT that uses cones, that are coupled to each other and that rotate in and out of a moveable position, can be changed. This method is applicable to a CVT 1 (using cones with two opposite teeth or torque transmitting members) and a CVT 4 of this disclosure. Said "method for increasing the duration", which is referred to as the "method for increasing duration through independent axial position change", comprises of changing the axial position of the cones independent of each other. Here the axial position of each cone is changed when it is in a moveable position, regardless of the rotational position of the other cone.

A set-up for a CVT 1 where the "method for increasing duration through independent axial position change" can be applied is shown in Figs. 27 to 30. This CVT, referred to as CVT 1A, comprises of a cone 44A, a cone 44B, a transmission belt 45 for coupling cone 44A to cone 44B, and a tensioning pulley 46. Cone 44A and cone 44B are each a cone with two opposite teeth; the teeth of cone 44A are labeled as tooth 44A-S1 and 44A-S2, and the teeth of cone 44B are labeled as tooth 44B-S1 and 44B-S2. Also, it is preferably that tensioning pulley 46 is positioned on the slack side (and not on the tense side) of transmission belt 45.

For CVT 1A, the axial position of the cones can be changed independent of each other. Here when cone 44A is in a moveable position then its axial position can be changed regardless of the rotational position of cone 44B, which depending on its rotational position is or is not in a moveable position. And when cone 44B is in a moveable position then its axial position can be changed regardless of the rotational position of cone 44A, which depending on its rotational position is or is not in a moveable position.

The transmission ratio of a CVT 1A can be changed in the following manner, the axial position of cone 44A is changed the required amount as to allow for proper engagement during each "axial position changing interval" of cone 44A, regardless of the rotational position of cone 44B. An "axial position changing interval" of cone 44A is an interval that starts when cone 44A has started to rotate into a moveable position and ends when cone 44A has rotated out of a moveable position; and the axial position of cone 44B is changed the required amount as to allow for proper engagement during each "axial position changing interval" of cone 44B, regardless of the rotational position of cone 44A. An "axial position changing interval" of cone 44B is an interval that starts when cone 44B has started to rotate into a moveable position and ends when cone 44B has rotated out of a moveable position. The same method of changing the transmission ratio can also be used for a CVT 4; however for a CVT 4, cones 44A and 44B are each replaced with a cone with one torque transmitting member. The same method of changing the transmission ratio can also be used for other CVT's for which cones 44A and 44B are each replaced with different type of cone that rotates in and out of a moveable position.

Changing the axial position of a cone during an "axial position changing interval" means that the axial position of said cone has to be changed within the "axial position changing interval". Here the axial position of said cone can be changed after said cone has started to rotate into a moveable position and end before cone 44A has rotated out of a moveable position.

A moveable position for a cone of a CVT 1 is a rotational position of said cone where only one tooth of said cone is engaged with the transmission belt. And a moveable position for a cone of a CVT 4 is a rotational position of said cone where the non-torque transmitting arc of said cone is not completely covered by its transmission belt.

The "axial position changing interval" of a cone of a CVT 1 which starts when only one tooth of the cone is engaged with the transmission belt and ends when the currently not engaged tooth of the cone reengages with the transmission belt. And the "axial position changing interval" of a cone of a CVT 4 starts when the non-torque transmitting arc of the cone starts to be not completely covered by its transmission belt and ends when the non-torque transmitting arc of the cone starts to be completely covered by its transmission belt.

The mechanism used to change the axial position of a cone should be fast enough so that it can change the axial position of a cone the required amount during an "axial position changing interval" of said cone. In order to actuate the mechanism used to change the axial position of a cone, only the actuation start time (which should be the same as the start time of the "axial position changing interval" of its cone) of the mechanism is needed.

In order to change the axial position of a cone the required amount as to allow for proper engagement during an "axial position changing interval", the items described in the "Transmission Ratio Changing Mechanisms" section and "Other Methods and Devices Related to Changing the Transmission Ratio" section can be used.

For a CVT 1, the required amount of axial position change of a cone as to allow for proper engagement during an "axial position changing interval" can be obtained through experimentation and/or engineering. For example, an experiment can be made by axially moving the cone of a CVT 1 from one axial position that allows for perfect engagement to another axial position that allows for perfect engagement such that the circumferential lengths between the teeth of the cone are each increased or decreased one tooth width. Here for the axial positions of said cone that allows for perfect engagement, a transmission belt can be perfectly wrapped (without stretching or slacking) from one tooth of said cone to the other tooth of said cone.

Here as a theoretical guidance, if no rotational adjustment between the teeth of a cone of a CVT 1 is allowed, then the axial position of said cone has to be changed from *"one transmission diameter of said cone* where both circumferential lengths between one tooth of said cone and the other tooth of said cone is a multiple of the width of a tooth of 'the transmission belt of said cone positioned at said *one transmission diameter of said cone'"* to *"another transmission diameter of said cone* where both circumferential lengths between one tooth of said cone and the other tooth of said cone is a multiple of the width of a tooth of 'the transmission belt of said cone positioned at said *another transmission diameter of said cone".* Here, the transmission diameter of said cone is the diameter of the surface of said cone where its transmission belt is positioned. And because of the location of the neutral-axis of the transmission belt, the width of a tooth of a portion of the transmission belt that is covering a surface of said cone, depends on the transmission diameter of said cone.

For a CVT 4, the required amount of axial position change of a cone as to allow for proper engagement during an "axial position changing interval" can be obtained through experimentation and/or engineering. For example, an experiment can be made by axially moving the cone of a CVT 4 from one axial position that allows for perfect engagement to another axial position that allows for perfect engagement such that the circumferential length of the non-torque transmitting arc is increased or decreased one tooth width. Here for the axial positions of said cone that allows for perfect engagement, a transmission belt can be perfectly wrapped (without stretching or slacking) from one end of the non-torque transmitting arc of said cone to the other end of the non-torque transmitting arc of said cone.

Here as a theoretical guidance, the axial position of a cone of a CVT 4 has to be changed from *"one transmission diameter* of said cone where the non-torque transmitting arc of said cone is a multiple of the width of a tooth of 'the transmission belt of said cone which is positioned at said *one transmission diameter"* to *"another transmission diameter* of said cone where the non-torque transmitting arc of said cone is a multiple of the width of a tooth of 'the transmission belt of said cone which is positioned at said *another transmission diameter"'*. Here, the transmission diameter of said cone depends on the diameter of the surface of said cone where its transmission belt is positioned.

The requirement of changing the axial position of a cone the required amount as to allow for proper engagement during an "axial position changing interval" primarily applies to CVT's using toothed torque transmission. For most CVT's using friction torque transmission, the axial position of a cone can be changed any amount (does not have to be changed a specific amount) during an "axial position changing interval".

If the axial position of cone 44A and cone 44B are changed independent of each other, then slack needs to be removed or provided for transmission belt 45; since changing the axial positions of the cones independent of each other can cause instances where the cones are not perfectly aligned. If the cones are perfectly aligned (the larger end of one cone is perfectly aligned with the smaller end of the other cone), then the transmission diameter of one cone increases proportionally with the decrease of the transmission diameter of the other cone so that proper tension in transmission belt 45 is maintained; if the cones are not perfectly aligned, then this is not so and slack needs to be removed or provided.

Tensioning pulley 46 is used to provide and/or remove slack in the transmission belt 46 (which can be due to instances where the axial positions of the cones are not changed at the same time) as needed. The axial position of the cones can be changed in manner so that slack only needs to be provided (the transmission belt remains tight but tension in the transmission belt is relieved to prevent breakage by having the tensioning pulley remove less slack), slack only needs to be removed, or slack needs to be provided and removed. The difference between the axial positions of the cones (axial misalignment between the larger end of one cone and the smaller end of the other cone) should be limited such that no instances of excessive amount of slack or insufficient amount of slack occur. It is preferable and recommended that the axial position changing procedure for the cones is designed so that the maximum "axial misalignment between the larger end of one cone and the smaller end of the other cone" is only "one axial position change step of a cone".

In order to provide and/or remove slack, tensioning pulley 46 (see Figs. 27 and 29) pushes transmission belt 46 upwards due to the force of a spring. Here when more slack in transmission belt 46 is needed, the spring of tensioning pulley 46 gets compressed so as to provide more slack; and when slack needs to be removed from transmission belt 46, the spring of tensioning pulley 46 pushes the transmission belt up so as to remove slack. In this manner, proper tension in transmission belt 46 can be maintained despite the fact that the axial position of the cones are changed independent of each other.

It is not a necessity that in order to maintain proper tension in transmission belt 46, tensioning pulley 46 has to be pushed upwards by a spring. Tensioning pulley 46 can be pushed in any direction (down, sideways, diagonally, etc.) as long as it can provide and/or remove slack as needed. And the spring that pushes tensioning pulley 46 upwards can be replaced by weights, tensioning bands, compressed gasses, or any other means for providing a force.

Also in order for a CVT 1 to work properly, for each cone at least one tooth has to be engaged with the transmission belt at all times. And in order the CVT 4 to work properly, for each cone at least a portion of its torque transmitting member has to be engaged with the transmission belt at all times. In order to ensure the requirements of the previous two sentences, stationary or non-stationary support pulleys can be used. With proper positioning, tensioning pulley 46 can also be used as a support pulley.

This method significantly improves the performance of "a CVT 1, a CVT 4 and other CVT's for which the method of this section can be used, and hence would have been disclosed earlier (especially in Patent Applications that mention a CVT 1) if it was obvious.

This improvement might allow the construction of CVT's that can replace existing manual and automatic transmissions, since a short and unpredictable duration at which the transmission ratio can be changed was the main disadvantage of a CVT 1 (which offers a lot of advantages over a other transmissions other than this disadvantage) and other CVT's where this was a problem, so this might be a very important invention.

If this method results in the construction of CVT's that can replace existing manual and automatic transmissions, than this will be a very important; since currently no CVT that can replace manual and automatic transmissions exist, despite the fact that a CVT can provide more gear ratios than manual and automatic transmissions (more gear ratios result in better performance and fuel efficiency).

### Alternate Configurations/Alternate CVT 's

### CVT 4

An alternate CVT that is similar to a CVT 1 and is labeled as a CVT 4 is shown in Figs. 31 to 34. A CVT 4, like a CVT 1, has one cone mounted on one shaft/spline that is coupled to another cone mounted on another shaft/spline by a transmission belt. But unlike a CVT 1, a CVT 4 uses a cone with one torque transmitting member for each one of the cones instead of a cone with two opposite teeth. All items and description of a CVT 1 are also relevant here.

A cone with one torque transmitting member comprises of a cone and one torque transmitting member that is attached to said cone so that it is constrained rotate-ably relative to said cone, but can slide axially relative to said cone. Said torque transmitting member can have teeth that can engage with the teeth of the transmission belt, so that a toothed engagement CVT can be constructed; although friction can also be used for torque transmission between the torque transmitting member of a cone and its transmission belt.

For the CVT 4 shown in Figs. 31 to 34, the cones are labeled as cone 47A and cone 47B, the torque transmitting members as torque transmitting member 47A-M1 and torque transmitting member 47B-M1, the non-torque transmitting arcs as non-torque transmitting arc 48A and non-torque transmitting arc 48B, the transmission belt as transmission belt 49, the tensioning pulley as tensioning pulley 50, and the support pulley as support pulley 51.

For the CVT 4 shown in Figs. 31 to 34 a tensioning pulley 50, that can provide and/or remove slack as needed as to allow the axial positions of the cones to be changed independent of each other, is used; so that the method described in the "Method for Increasing Duration Through Independent Axial Position Change" can be used. It is recommended that tensioning pulley 50 is positioned on the slack side of transmission belt 49. If the "Method for Increasing Duration Through Independent Axial Position Change" is not used, then tensioning pulley 50 is not needed and might be eliminated or replaced with a support pulley.

For preferred operation of a CVT 4 it needs to be ensured that: a) for each cone a portion of its torque transmitting member is always engaged for torque transmission with the transmission belt for all transmission ratios of the CVT; and b) for each cone an instance exist where its non-torque transmitting arc (which is the circumferential length of a cone that is positioned opposite of a torque transmitting member, see Figs. 31 & 32) is not completely covered by the transmission belt, since it is preferable that the axial position of a cone is only be changed when its non-torque transmitting arc is not completely covered by the transmission belt.

If needed, items a) and b) of the previous paragraph can be ensured through the use of support pulleys. In Figs. 31 and 33, two support pulleys are used, a configuration where more support pulleys, less support pulleys, or no support pulleys are used can also be constructed. The support pulleys shown in Figs. 31 and 33 are labeled as tensioning pulley 50, which here acts both as a tensioning pulley and as a support pulley, and support pulley 51.

In order to change the axial position of a cone only when its non-torque transmitting arc is not completely covered by its transmission belt, a "marked wheel and a marked wheel sensor system" or a "rotational position sensor" can be used to indicate when the axial position of said cone can be changed.

Here a "marked wheel and a marked wheel sensor system" or a "rotational position sensor" can be used to indicate when the trailing end of the torque transmitting member of a cone becomes disengaged with its transmission belt, which indicates the start of a duration when the non-torque transmitting arc of a cone is not completely covered by its transmission belt, and hence also the instance where the axial position changing procedure for said cone can be started.

If a "marked wheel and a marked wheel sensor system" as shown in Fig. 35 is used, then for each cone a marked wheel 52 and a marked wheel sensor 53 can be used. A Marked wheel 52, which has one marker 52-S1, should be mounted on the same shaft/spline as its cone and during operation, no relative rotational movements between a cone and its marked wheel 52 should be allowed. And the marked wheel sensor 53, which senses engagement with marker 52-S1, should be mounted so that it is fixed relative to the reference frame of the CVT.

The relative rotational/rotational positions of "marker 52-S1 and marked wheel sensor 53" should be set so that the marker 52-S1 is engaged with marked wheel sensor 53 at or slightly after the trailing end of the torque transmitting member of their cone becomes disengaged with its transmission belt for all axial positions of their cone. But, when actuating the axial position changing procedure of a cone when "the non-torque transmitting arc of said cone is completely covered by its transmission belt" does not cause any damage in the CVT, then the relative rotational/rotational positions of "marker 52-S1 and marked wheel sensor 53" can also be set so that marker 52-S1 is engaged with marked wheel sensor 53 slightly before the trailing end of the torque transmitting member of their cone becomes disengaged with its transmission belt for some or all axial positions of their cone.

The relative rotational/rotational positions of "marker 52-S1 and marked wheel sensor 53" as required by the previous paragraph can be determined through experimentations.

If the rotational position where the trailing end of the torque transmitting member of a cone becomes disengaged with its transmission belt changes significantly with changes in the axial position of said cone, then the "marked wheel and marked wheel sensor system" is not very accurate. Here greater accuracy can be provided by using a rotational position sensor.

A rotational position sensor can also be used to indicate the instance where the axial position changing procedure for a cone can be started. Here the rotational position sensor is used to provide the controlling computer/controller of the CVT with the current rotational position of its cone. The current rotational position of a cone can be represented in degrees or radians. For example, a reference point which rotational position does not change as the axial position of its cone is changed, can be fixed/referenced to its cone. And the rotational position where the reference point is at the 12 o'clock position can be represented as the 0 degree rotational position, the rotational position where a point 1 degree clockwise of the reference point is at the 12 o'clock position can be represented as the 1 degree rotational position, the rotational position where a point 2 degree clockwise of the reference point is at the 12 o'clock position can be represented as the 2 degree rotational position, and so forth.

Next, an "axial position changing rotational position value" that indicates when the axial position changing procedure of a cone can be started can be programmed into the controlling computer/controller of the CVT that uses a rotational position sensor for a cone. An "axial position changing rotational position value" simply represents the rotational position of a cone where its axial position can be changed. And like the rotational position of a cone, the "axial position changing rotational position value" can also be represented in degrees or radians. For maximum accuracy it is recommended that each axial position of a cone has its own "axial position changing rotational position value".

During operation, the controlling computer/controller of the CVT that uses rotational position sensors for its cones should continuously monitor the rotational positions each its cones. When the axial position of a cone needs to be changed, the controlling computer/controller waits until the actual rotational position of said cone matches the "axial position changing rotational position value" for said cone for its current axial position, and once the actual rotational position of said cone matches/corresponds to said "axial position changing rotational position value", the controlling computer/controller initiates the axial position changing procedure for said cone.

The "axial position changing rotational position value" for each axial position of a cone of a CVT can be determined through experimentations.

In order to obtain the maximum duration for which the axial position of a cone can be changed, the position(s) of the support pulley(s) can be changed as the axial position of their cone is changed. Here slide-sliders mechanisms, electro/hydraulic positing mechanism, etc can be used.

The transmission ratio of a CVT 4 can be changed by changing the axial position of the cones relative to the transmission belt, which can be achieved by changing the axial position of the cones and holding fixed the axial position of the transmission belt. Or if desired the transmission ratio can also be changed by changing the axial position of the transmission belt and holding fixed the axial position of the cones.

In order to change the axial position of a cone without any significant stretching of the transmission belt, a cone (cone with one torque transmitting member) has to be in a moveable position, which is a rotational position where its non-torque transmitting arc is not completely covered by its transmission belt.

For a CVT 4, in order to change the transmission ratio, the axial position of each cone relative to the transmission belt can be changed independently so that the axial position of each cone is changed when it is in a moveable position regardless of the rotational position of the other cone. If the axial position of each cone relative to the transmission belt is changed independently, then a tensioning pulley (such as a tensioning pulley 50 of Figs. 31 & 33) to provide and/or remove slack as required is needed. Details about changing the axial position of each cone relative to the transmission belt independently for a CVT 4 as well as other CVT's is described in the "Method for Increasing Duration Through Independent Axial Position Change" section.

The alternative to changing the transmission ratio by changing the axial position of each cone relative to its transmission belt independently is to change the axial position of each cone relative to its transmission belt simultaneously, such as by changing the axial position of the transmission belt for example. In order to change the transmission ratio by changing the axial position of each cone relative to its transmission belt simultaneously, both cones have to be in a moveable position during transmission ratio change; since the instance when one cone is in a moveable position can be different from the instance when the other cone is in a moveable position, the uninterrupted duration when both cones are in a moveable position can be very short and difficult to estimate.

The preferred configuration for a CVT 4 is shown in Figs. 36 to 39. This CVT comprises of cone 54A mounted on one spline that is coupled by a transmission belt 55 (which can be replaced with a chain in an alternate configuration) to a cone 54B mounted on another spline. A tensioning pulley 56, positioned on the slack side of transmission belt 55, is used to maintain proper tension in transmission belt 55 as the axial position of the cones are changed independent of each other. And a support pulley 57 is used to ensure that for each cone at least a portion of its torque transmitting member is engaged with transmission belt 55 for torque transmission.

Cones 54A and 54B are cones with one torque transmitting member. Cone 54A has a torque transmitting member 54A-M1, non-torque transmitting member 54A-M2, and a leveling loop 54A-M3. Cone 54B has a torque transmitting member 54B-M1, non-torque transmitting member 54B-M2, and a leveling loop 54B-M3. Torque transmitting members 54A-M1 and 54B-M1 have teeth so that toothed torque transmission can be used.

A leveling loop, such as leveling loop 54A-M3 and leveling loop 54B-M3, is a flexible loop with a tapered bottom surface that provides a level top resting surface for a transmission belt. It is recommended that each leveling loop is made out of a low friction flexible material that can expand and contract accordingly with the expansion and contraction of its cone; otherwise the CVT needs to be configured so that the leveling loops do not get in the way as the transmission ratio of their CVT is changed.

In order to optimize the position of the support pulleys (tensioning pulley 56 acts as a support pulley and tensioning pulley), tensioning pulley 56 and support pulley 57 are mounted so that they can freely move sideways in the horizontal direction. But no movements in the vertical direction is allowed for support pulley 57. And tensioning pulley 56 is pushed upwards in the vertical direction so that it can maintain proper tension in transmission belt 56 for all operating conditions of the CVT.

In order to have full surface to surface contact engagement between a torque transmitting member and its cone, it is preferred that a cone with one torque transmitting member that has one "straight engagement surfaces between torque transmitting member and its cone" and one "curved engagement surfaces between a torque transmitting member and its cone" is used, obviously other cones can also be used. An example of this type of cone is shown in Figs. 91A, 91B, 92A, and 92B of US Patent 7,722,490 B2. This type of cone only allows for full surface to surface contact engagement torque transmission in one direction. Note: for subsequent description, the term "straight engagement surfaces between torque transmitting member and its cone" will simply be referred as straight engagement surfaces, and the term "curved engagement surfaces between a torque transmitting member and its cone" will simply be referred as curved engagement surfaces.

It is recommended, but not necessary, that here each cone is designed so as to have full surface to surface contact engagement torque transmission, as can be provided by straight engagement surfaces, in its primary pulling direction. Here for most circumstances, if a cone is pulling its transmission belt, then the portion of the torque transmitting member at/near the end of the straight engagement surfaces should engage first (the straight engagement surfaces are at the leading end); and if a cone is pulled by its transmission belt, then the portion of the torque transmitting member at/near the end of the curved engagement surfaces should engage first (the straight engagement surfaces are at the trailing end). Here the configuration for a cone that is pulled by its transmission belt can be the mirror-image of the configuration for a cone that is pulling its transmission belt.

Having a CVT 4 only be able to transmit a large torque in one direction should not be problem. Most vehicles/machines primarily only move in one direction; and reversing gearing can be used if otherwise.

For a vehicle/machine, there might be instances where the output shaft is pulling the input shaft (the torque in these situation is referred here as reversed torque), such as when the engine input speed is slower than the vehicles speed due to inertia for example. The reversed torque in these situations is low since it is usually limited by the torque needed to turn an engine, which can be turned by hand. The preferred CVT 4 should be designed to be able to handle any reversed torque. Or if desired a one-way clutch can be used to prevent a reversed torque from entering the CVT. For a vehicle this can be achieved by using a one-way clutch that only allows the output shaft of the CVT to provide torque to the vehicle/machine but prevents the vehicle/machine from providing any input torque to the CVT. Or if desired a one-way torque limiting clutch can be used to limit the amount of torque that a vehicle can apply to the output shaft of its CVT.

In order to limit the magnitude of the reversed torque applied to a CVT/transmission and capture some on the energy of the reversed torques, the output shaft of a CVT/transmission can be coupled to a generator. Here when a large reversed torque or any reversed torque occurs, the generator be can engaged for energy capture to the output shaft of the CVT/transmission.

The engagement and disengagement of the generator for energy capture can be controlled using many different control schemes. For example, with the use of a torque measuring/estimating device, a "reversed torque generator actuation value" and a "reversed torque generator deactivation value" can be used to control the engagement and disengagement of the generator for energy capture. Or for a vehicle, the generator can also be engaged for energy capture every time the driver lifts the gas paddle or lifts the gas paddle a certain amount; or every time the brake is applied.

### Miscellaneous Methods and Devices

### New Transmission Belts for Cone with Torque Transmitting Member(s)

A "flat belt with teeth transmission belt" that can be used with a cone that uses one or several torque transmitting member(s) that have partial circular surfaces as its teeth (such as used for the cone with one torque transmitting member shown in Figs. 91A, 91B, 92A, and 92B of US Patent 7,722,490 B2), and leveling loop is shown as a side-view in Fig.40, as a sectional-view in Fig. 41, and as a top-view in Fig. 42.

The "flat belt with teeth transmission belt" comprises of a flat belt 58 on which teeth 59 are attached. Each tooth 59 comprises of two separate tooth halves 59-M1. And the shape of each tooth half 59-M1 comprises of two tooth half ends 59-M1-S1 and a tooth connector 59-M1-S2, which connects the two tooth half ends 59-M1-S1. Obviously each tooth half end 59-M1-S1 does not have to represent exactly half of a tooth, and other tooth shapes besides of a round tooth shape can also be used.

The tooth connectors 59-M1-S2 of each tooth are used to sandwich/clamp flat belt 58. Adhesives, holes in flat belt 58 into which dents of the tooth connectors 59-M1-S2 are inserted, and other methods, can be used to securely attach the tooth halves 59-M1 to flat belt 58. Obviously, there are many other ways that teeth 59 can be attached to flat belt 58.

Regarding the "flat belt with teeth transmission belt" described in the previous paragraph, In order to increase the flexibility of that transmission belt, the tooth connectors 59-M1-S2 can be made to have a narrower bases. An "alternate flat belt with teeth transmission belt" where the tooth connectors have narrower bases is shown as a side-view in Fig.43 and as a sectional-view in Fig. 44. For this transmission belt, the flat belt is labeled as flat belt 58A, and the tooth halves are labeled as tooth halves 59A-M1.

Regarding the "flat belt with teeth transmission belt" and the "alternate flat belt with teeth transmission belt" of the previous paragraphs, the width of the surface of the tooth connectors that is bonded to the flat belt can affect the bending properties of the transmission belts. If this prevents smooth engagement between a transmission belt and its torque transmitting member(s), then the bending properties of a torque transmitting member(s) can be adjusted accordingly, such as by adjusting the width of the tooth plates of the torque transmitting member of a cone with one torque transmitting member shown in Figs. 91A, 91B, 92A, and 92B of US Patent 7,722,490 B2 for example.

A "teeth block transmission belt" that can be used with a cone that uses one or several torque transmitting member(s) that have partial circular surfaces as its teeth (such as used for the cone with one torque transmitting member shown in Figs. 91A, 91B, 92A, and 92B of US Patent 7,722,490 B2), and leveling loop is shown as a side-view in Fig.45, as a sectional-view in Fig. 46, and as a top-view in Fig. 47.

For this transmission belt, tooth blocks 60 that have teeth 60-S1 shaped on both of their side surfaces are used. The tooth blocks 60 are connected using rubber segments 61.

In order to ensure smooth engagement between a "teeth block transmission belt" and its torque transmitting member(s), it is recommended that the width of the tooth blocks 60 of the "teeth block transmission belt" and the width of the tooth plates of its torque transmitting member(s) using tooth plates are identical.

All transmission belts of this section can also be used for other purposes besides the ones mentioned in this disclosure. Also instead of using a transmission belt, all items of this disclosure can also use a chain. It is believed that somebody skilled in the art should be able to design a chain for such purpose.

### PREFERRED EMBODIMENT OF THE INVENTION (BEST MODE)

A CVT that comprises of the preferred embodiments (devices/methods) described in this disclosure is a preferred CVT 4 shown in Figs. 36 to 39, that uses: a "flat belt with teeth transmission belt" shown in Figs. 40 to 42 as its transmission belt, the "method for increasing duration through independent axial position change" to change its transmission ratio, and a "lever indexing mechanism 2 (shown in Fig. 15) and a "straight rotation to linear converting mover mechanism (shown in Figs. 23 to 24) to change its transmission ratio. All other devices/methods are also useful and have merit, but they are less preferred.

## Claims

1. A method for increasing the duration the transmission ratio of a CVT that uses two cones (44A, 44B) mounted on separate shafts/splines, that are coupled to each other by a means (45) for coupling and that rotate in and out of a moveable position, can be changed;
a said cone is in a said moveable position when it is in a rotational position where changing its axial position relative to its said means for coupling is preferred, and a said cone is not in a moveable position when it is in a rotational position where changing its axial position relative to its said means for coupling is not preferred; said method is **characterized by**,
a) changing the axial position of said cones independent of each other; wherein the axial position of each said cone is changed when it is in a said moveable position, regardless of the rotational position of the other said cone;
b) utilizing a means (46) for tensioning that can provide and/or remove slack in said means for coupling as needed as to allow the axial positions of said cones to be changed independent of each other.

2. The method of Claim 1, wherein said cones are each a cone with two opposite teeth (44A, 44B); said means for coupling is a transmission belt (45); and said means for tensioning is a tensioning pulley (46).

3. The method of Claim 2, wherein a said moveable position for a said cone (44A, 44B) is rotational position of said cone (44A, 44B) where only one tooth of said cone is engaged with said transmission belt (45).

4. The method of Claim 1, wherein said cones are each a cone with one torque transmitting member; a said cone with one torque transmitting member comprises of a cone (47A, 47B) and a torque transmitting member (47A-M1, 47B-M1) that is attached to said cone (47A, 47B) so that it is constrained rotate-ably relative to said cone (47A, 47B), but can slide axially relative to said cone (47A, 47B); wherein said means for coupling is a transmission belt (49); and wherein said means for tensioning is a tensioning pulley (50).

5. The method of Claim 4 wherein for said CVT the following is ensured:
a) for each said cone (47A, 47B), a portions of its said torque transmitting member (47A-M1, 47B-M1) is always engaged for torque transmission with said transmission belt (49) for all transmission ratios of said CVT; and
b) for each said cone (47A, 47B), an instance exist where its said non-torque transmitting arc (48A, 48B), which is the circumferential length of a said cone (47A, 47B) that is positioned opposite of a said torque transmitting member (47AM1, 47B-M1), is not completely covered by said transmission belt (49).

6. The method of Claim 5, wherein a said moveable position for a said cone with one torque transmitting member is rotational position of said cone with one torque transmitting member where said non-torque transmitting arc (48A, 48B) of said cone (47A, 47B) is not completely covered by its said transmission belt (49).

## Patentansprüche

1. Verfahren zum Erhöhen der Dauer, während der das Übersetzungsverhältnis eines CVT verändert werden kann, das zwei Kegel (44A, 44B) verwendet, die an separaten Wellen/Keilnutwellen befestigt sind, die durch eine Vorrichtung (45) zum Koppeln aneinander gekoppelt sind und die sich in eine bewegliche Position und aus einer beweglichen Position drehen;
wobei sich einer der Kegel in einer der beweglichen Positionen befindet, wenn er sich in einer Drehposition befindet, in der das Ändern seiner axialen Position in Bezug auf seine Vorrichtung vom Koppeln bevorzugt wird, und sich einer der Kegel nicht in einer beweglichen Position befindet, wenn er sich in einer Drehposition befindet, in der das Ändern seiner axialen Position in Bezug auf seine Vorrichtung zum Koppeln nicht bevorzugt wird;
wobei das Verfahren **gekennzeichnet ist durch**:
a) Ändern der axialen Position der Kegel unabhängig voneinander; wobei die axiale Position jedes Kegels unabhängig von der Drehposition des anderen Kegels verändert wird, wenn er sich in einer der beweglichen Positionen befindet;
b) Verwenden einer Vorrichtung (46) zum Spannen, die nach Bedarf in der Vorrichtung zum Koppeln Durchhang bereitstellen und/oder entfernen kann, um zu ermöglichen, dass die axialen Positionen der Kegel unabhängig voneinander geändert werden.

2. Verfahren nach Anspruch 1, wobei die Kegel jeweils ein Kegel mit zwei gegenüberliegenden Zähnen (44A, 44B) sind; wobei die Vorrichtung zum Koppeln ein Übertragungsriemen (45) ist und die Vorrichtung zum Spannen eine Spannrolle (46) ist.

3. Verfahren nach Anspruch 2, wobei eine der beweglichen Positionen für einen der Kegel (44A, 44B) eine Drehposition des Kegels (44A, 44B) ist, in der nur ein Zahn des Kegels mit dem Übertragungsriemen (45) in Eingriff ist.

4. Verfahren nach Anspruch 1, wobei die Kegel jeweils ein Kegel mit einem Drehmomentübertragungselement sind; wobei einer der Kegel mit einem Drehmomentübertragungselement aus einem Kegel (47A, 47B) und einem Drehmomentübertragungselement (47A-M1, 47B-M1) besteht, das mit dem Kegel (47A, 47B) so verbunden ist, dass es in Bezug auf den Kegel (47A, 47B) drehbar gehalten wird, aber in Bezug auf den Kegel (47A, 47B) axial gleiten kann;
wobei die Vorrichtung zum Koppeln ein Übertragungsriemen (49) ist; und
wobei die Vorrichtung zum Spannen eine Spannrolle (50) ist.

5. Verfahren nach Anspruch 4, wobei für das stufenlose Getriebe Folgendes gewährleistet ist:
a) für jeden Kegel (47A, 47B) ist ein Abschnitt seines Drehmomentübertragungselements (47A-M1, 47B-M1) zur Drehmomentübertragung mit dem Übertragungsriemen (49) für alle Übersetzungsverhältnisse des stufenlosen Getriebes immer in Eingriff; und
b) für jeden Kegel (47A, 47B) existiert ein Fall, in dem sein nicht Drehmoment übertragender Bogen (48A, 48B), der die Umfangslänge eines der Kegel (47A, 47B) bildet, der gegenüber einem der Drehmomentübertragungselemente (47A-M1, 47B-M1) positioniert ist, durch den Übertragungsriemen (49) nicht vollständig bedeckt ist.

6. Verfahren nach Anspruch 5, wobei eine der beweglichen Positionen für einen der Kegel mit einem Drehmomentübertragungselement eine Drehposition des Kegels mit einem Drehmomentübertragungselement ist, wobei der nicht Drehmoment übertragende Bogen (48A, 48B) des Kegels (47A, 47B) durch den Übertragungsriemen (49) nicht vollständig bedeckt ist.

## Revendications

1. Procédé pour augmenter la durée au terme de laquelle le rapport de transmission d'une Transmission à Variation Continue ou TVC, qui utilise deux cônes (44A, 44B) montés sur des arbres/cannelures séparé(e)s, qui sont couplés l'un à l'autre par un moyen de couplage (45) et qui prennent et quittent par rotation une position mobile, peut être changé ;
un dit cône est dans une dite position mobile lorsqu'il est dans une position de rotation dans laquelle la modification de sa position axiale par rapport à son dit moyen de couplage a la préférence, et un dit cône n'est pas dans une position mobile lorsqu'il est dans une position de rotation dans laquelle la modification de sa position axiale par rapport à son dit moyen de couplage n'a pas la préférence ;
ledit procédé est **caractérisé par** :
a) la modification de la position axiale desdits cônes de manière indépendante pour l'un et l'autre cônes ; dans lequel la position axiale de chaque dit cône est modifiée lorsqu'il est dans une dite position mobile indépendamment de la position de rotation de l'autre dit cône ;
b) l'utilisation d'un moyen de tension (46) qui peut induire et/ou supprimer un jeu dans ledit moyen de couplage en fonction des besoins de manière à permettre que les positions axiales desdits cônes soient modifiées de manière indépendante pour l'un et l'autre cônes.

2. Procédé selon la revendication 1, dans lequel lesdits cônes sont chacun un cône muni de deux dents opposées (44A, 44B) ; ledit moyen de couplage est une courroie de transmission (45) ; et ledit moyen de tension est une poulie de tension (46).

3. Procédé selon la revendication 2, dans lequel une dite position mobile pour un dit cône (44A, 44B) est une position de rotation dudit cône (44A, 44B) dans laquelle seulement une dent dudit cône est engagée avec ladite courroie de transmission (45).

4. Procédé selon la revendication 1, dans lequel lesdits cônes sont chacun un cône muni d'un élément de transmission de couple ; un dit cône muni d'un élément de transmission de couple est constitué par un cône (47A, 47B) et par un élément de transmission de couple (47A-M1, 47B-M1) qui est lié audit cône (47A, 47B) de sorte qu'il soit contraint à rotation par rapport audit cône (47A, 47B), mais qu'il puisse coulisser axialement par rapport audit cône (47A, 47B) ; dans lequel ledit moyen de couplage est une courroie de transmission (49) ; et dans lequel ledit moyen de tension est une poulie de tension (50).

5. Procédé selon la revendication 4, dans lequel, pour ladite TVC, ce qui suit est assuré :
a) pour chaque dit cône (47A, 47B), une partie de son dit élément de transmission de couple (47A-M1, 47B-M1) est toujours engagée pour une transmission de couple avec ladite courroie de transmission (49) pour tous les rapports de transmission de ladite TVC ; et
b) pour chaque dit cône (47A, 47B), il existe une circonstance dans laquelle son dit arc de non transmission de couple (48A, 48B), qui est la longueur circonférentielle d'un dit cône (47A, 47B) qui est positionnée à l'opposé d'un dit élément de transmission de couple (47A-M1, 47B-M1), n'est pas complètement recouvert par ladite courroie de transmission (49).

6. Procédé selon la revendication 5, dans lequel une dite position mobile pour un dit cône muni d'un élément de transmission de couple est une position de rotation dudit cône muni d'un élément de transmission de couple dans laquelle ledit arc de non transmission de couple (48A, 48B) dudit cône (47A, 47B) n'est pas complètement recouvert par sa dite courroie de transmission (49).
